# EUROPÄISCHE PATENTSCHRIFT

(11) **EP 2 385 924 B1**
(45) Veröffentlichungstag und Bekanntmachung des Hinweises auf die Patenterteilung: **01.01.2014**
(21) Anmeldenummer: 09764173.2
(22) Anmeldetag: 25.11.2009
(51) Int. Cl.: B65B 25/14, B65G 43/10

(54) **COMPUTERGESTEUERTES FÖRDERSYSTEM UND FÖRDERVERFAHREN**
COMPUTER-CONTROLLED CONVEYOR SYSTEM AND CONVEYING METHOD
SYSTÈME DE TRANSPORT COMMANDÉ PAR ORDINATEUR ET PROCÉDÉ DE TRANSPORT

(30) Priorität: 12.01.2009 CH 38092009
(43) Veröffentlichungstag der Anmeldung: 16.11.2011
(73) Patentinhaber: Ferag AG, 8340 Hinwil (CH)
(72) Erfinder: GALLATI, Rudolf, CH-8732 Neuhaus (CH)
(74) Vertreter: Rentsch Partner AG
(86) Internationale Anmeldenummer: PCT/CH2009/000377
(87) Internationale Veröffentlichungsnummer: WO 2010/078664

(56) Entgegenhaltungen:
- EP-A- 0 324 900
- EP-A- 1 964 802
- US-A1- 2002 121 076

## Beschreibung

### Technisches Gebiet

Die vorliegende Erfindung betrifft ein computergesteuertes Fördersystem, ein computergesteuertes Förderverfahren und die Verwendung eines Computerprogrammprodukts in einem solchen Fördersystem. Die vorliegende Erfindung betrifft insbesondere ein computergesteuertes Fördersystem und ein computergesteuertes Förderverfahren, in welchen mindestens ein Förderelement mit einem Antrieb verwendet wird, der einen Positionsgeber zum Angeben der aktuellen Position des Förderelements aufweist, insbesondere ein Fördersystem und ein Förderverfahren für flexible flächige Gegenstände, insbesondere Druckereierzeugnisse und weitere Stückprodukte, die den Druckereierzeugnissen beigelegt werden.

### Stand der Technik

Bei bekannten Fördersystemen für flexible flächige Gegenstände wie Druckereierzeugnisse werden die Gegenstände in einem festen Systemtakt von Förderelementen und Weiterverarbeitungsmaschinen transportiert. In der Regel sind die einzelnen Förderelemente respektive Weiterverarbeitungsmaschinen dazu mechanisch vollständig gekoppelt und das gesamte Fördersystem wird im Betrieb für die Bestückung und Bearbeitung synchronisiert hochgefahren respektive beim Betriebsabbruch oder Unterbruch heruntergefahren. Auf Grund der durch die mechanische Kopplung zwischen den einzelnen kaskadierten Systemkomponenten auftretenden Kräfte, ist die ausführbare Gesamtlänge solcher Fördersysteme physikalisch begrenzt. Die systemweite mechanische Taktsynchronisierung weist überdies den Nachteil auf, dass flexible und/oder dynamische Anpassungen, beispielsweise an verschiedene und/oder variierende Produktgrössen, kaum oder nur sehr ineffizient realisierbar sind. Insbesondere bringt auch die Kombination von fest getakteten Fördersystemen mit ungetakteten, kontinuierlich hinzugeführten Produkten Synchronisations- und Koordinationsprobleme. Beispielsweise besteht bei einer "endlos"-Zuführung von Verpackungsfolie das Problem, dass sich die Folie strecken kann und/oder dass sich Gegenstände auf der Folie verschieben können.

EP 1 964 802 A2 offenbart ein computergesteuertes Fördersystem, umfassend mindestens ein Förderelement mit einem Antrieb wobei
- mindestens einen Markierungsgenerator zum Generieren von virtuellen Markierungen ("mail piece identification") zugeordnet zum Förderelement, wobei die virtuellen Markierungen jeweils mit einer Markierungsposition ("values are sorted by sensor 12") gespeichert werden,
- mindestens ein Markierungssuchmodul zum Suchen von virtuellen Markierungen, die zum Zeitpunkt des Suchens ("at any given time") eine innerhalb eines definierten Streckenbereichs ("virtual sensor") liegende Relativposition ("predict the position of each mail piece", pre-gap G, post gap G' and length of the articles) zum zugeordneten Förderelement aufweisen, und
- ein Steuermodul ("the processor/controller"), welches eingerichtet ist, einen Aktor des Fördersystems abhängig davon anzusteuern, ob vom Markierungssuchmodul virtuelle Markierungen im definierten Streckenbereich gefunden wurden.

In diesem Dokument wird keine Verbindung zwischen virtuellen Markierungen und aktuellen Daten vorgesehen. Dieses System wird dabei nicht dynamisch kontrolliert.

### Darstellung der Erfindung

Es ist eine Aufgabe der vorliegenden Erfindung ein computergesteuertes Fördersystem und ein computergesteuertes Förderverfahren vorzuschlagen, welche zumindest einige Nachteile der bekannten Systeme nicht aufweisen. Es ist insbesondere eine Aufgabe der vorliegenden Erfindung ein computergesteuertes Fördersystem und ein computergesteuertes Förderverfahren vorzuschlagen, welche eine flexible und/oder dynamische Anpassung an verschiedene Produktgrössen ermöglichen. Es ist insbesondere eine weitere Aufgabe der vorliegenden Erfindung ein computergesteuertes Fördersystem und ein computergesteuertes Förderverfahren vorzuschlagen, welche eine Kombination von fest getakteten Förderelementen mit kontinuierlich zuführenden Förderelementen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass in einem computergesteuerten Fördersystem, welches mindestens ein Förderelement mit einem Antrieb und einen Positionsgeber zum Angeben einer aktuellen Position des Förderelements umfasst, virtuelle Markierungen zugeordnet zum Förderelement generiert werden, dass virtuelle Markierungen innerhalb eines definierten Streckenbereichs gesucht werden, und dass ein Aktor des Fördersystems abhängig davon angesteuert wird, ob virtuelle Markierungen im definierten Streckenbereich gefunden werden. Die virtuellen Markierungen werden jeweils mit einer Markierungsposition gespeichert, die auf der aktuellen Position des Förderelements zum Zeitpunkt des Generierens basiert. Die Markierungsposition einer virtuellen Markierung wird zum Beispiel jeweils basierend auf der aktuellen Position des zugeordneten Förderelements zum Zeitpunkt des Generierens und einem dem Markierungsgenerator zugeordneten, messbaren Distanzwert zu einem Systemnullpunkt berechnet. Es werden diejenigen virtuellen Markierungen gesucht, die zum Zeitpunkt des Suchens eine innerhalb eines definierten Streckenbereichs liegende Relativposition zum zugeordneten Förderelement aufweisen. Die Relativposition einer virtuellen Markierung wird zum Beispiel jeweils basierend auf ihrer Markierungsposition und der aktuellen Position des zugeordneten Förderelements zum Zeitpunkt des Suchens berechnet. Der Aktor wird insbesondere abhängig von der Markierungsposition einer im betreffenden Streckenbereich gefundenen virtuellen Markierung angesteuert. Durch das Generieren und Zuordnen der virtuellen Markierungen zu Förderelementen werden Markierungen virtuell auf ein Förderelement angebracht und bewegen sich virtuell mit dem Förderelement, indem sich ihre Relativposition mit der Bewegung des betreffenden Förderelements in Bezug zur aktuellen Position des bereffenden Förderelements ändert. Durch das Suchen der virtuellen Markierungen innerhalb eines definierten Streckenbereichs werden im Prinzip die virtuell auf dem betreffenden Förderelement angebrachten Markierungen innerhalb des Streckenbereichs detektiert. Dadurch wird es möglich virtuelle Markierungen flexibel und beispielsweise mit dynamisch ändernden Abständen auf den Förderelementen anzubringen, an frei definierbaren Stellen zu detektieren, und abhängig von deren Detektion respektive von deren aktuellen Relativposition Aktoren, insbesondere Antriebe, anzusteuern.

In einer bevorzugten Ausführungsvariante werden im computergesteuerten Fördersystem, die virtuellen Markierungen mit produktspezifischen Abständen zwischen den Markierungspositionen generiert, es wird eine aktuelle Produktposition eines auf dem Förderelement beförderten Produkts bestimmt, und beim Generieren einer virtuellen Markierung werden die Markierungspositionen jeweils abhängig von der aktuellen Produktposition variiert. Der Antrieb des Förderelements weist beispielsweise eine verstellbare Geschwindigkeit auf und dem Förderelement ist ein fest getakteter Förderer zum Zuführen von flexiblen flächigen Gegenständen vorgelagert. Das computergesteuerte Fördersystem generiert dann die virtuellen Markierungen mit Abständen gemäss Längenvorgaben, die den Gegenständen zugeordnet sind, und variiert beim Generieren einer virtuellen Markierung nicht nur den Abstand zur vorhergehenden virtuellen Markierung sondern auch die Geschwindigkeit des Förderelements abhängig von aktuellen Produktpositionen von Produkten auf dem Förderelement. Dem Förderelement ist beispielsweise eine Folienzuführung vorgeschaltet zum Zuführen einer mit Folienmarkierungen versehenen Folie auf das Förderelement, und das Fördersystem umfasst einen Sensor zur Bestimmung der Produktposition der Folie basierend auf den Folienmarkierungen. Das computergesteuerte Fördersystem generiert dann die virtuellen Markierungen mit produktspezifischen Abständen zwischen den Markierungspositionen, und passt beim Generieren einer virtuellen Markierung jeweils die Folienzuführung (Vorschub) und die betreffende Markierungsposition abhängig von einer Abweichung der Produktposition der Folie zur Markierungsposition einer vorhergehend erzeugten virtuellen Markierung entsprechend an. Durch die dynamische Anpassung des Abstands zwischen den virtuellen Markierungen sowie der Geschwindigkeit eines betreffenden Förderelements können die virtuellen Markierungen einerseits an den vorgegeben Takt eines Zubringers angepasst und andererseits mit der Zuführung eines weiteren Produkts synchronisiert werden, insbesondere mit den Folienmarkierungen einer zugeführten Folie.

In einer Ausführungsvariante wird im computergesteuerten Fördersystem ein Solltakt abhängig von Markierungspositionen von im definierten Streckenbereich gefundenen virtuellen Markierungen bestimmt, und es wird ein dem Förderelement nachgelagerter Förderer zum Wegführen von Produkten mit dem Solltakt angesteuert. Somit kann der Solltakt dynamisch an aktuelle Verteilung (Distanzierung) der virtuellen Markierungen auf dem Förderelement angepasst werden.

In einer weiteren Ausführungsvariante weist der Antrieb des Förderelements eine verstellbare Geschwindigkeit auf, und im computergesteuerten Fördersystem wird der Streckenbereich abhängig von der Geschwindigkeit des Förderelements definiert. Durch die geschwindigkeitsabhängige Positionierung und/oder Bereichslänge eines Streckenbereichs für die Detektion von virtuellen Markierungen kann eine Anpassung an die spezifische Reaktions- respektive Schaltzeit von anzusteuernden Aktoren vorgenommen werden.

In einer weiteren bevorzugten Ausführungsvariante umfasst das computergesteuerte Fördersystem einen Sensor zur Detektion eines auf dem Förderelement beförderten Produkts, welcher dem Streckenbereich zugeordnet ist, und der Aktor wird beim Auffinden einer im Streckenbereich liegenden virtuellen Markierung abhängig von der Detektion des Produkts angesteuert. Die virtuelle Markierung repräsentiert beispielsweise einen zum Verpackungsschweissen vorgesehenen Zwischenraum zwischen nacheinander folgenden Gegenständen und der Aktor ist als Schweissbalken ausgeführt. In diesem Beispiel ist der Sensor als Lichtschranke ausgeführt und der Schweissbalken wird abhängig davon angesteuert, ob die Lichtschranke einen beförderten Gegenstand detektiert, was auf eine fehlende Trennung der Gegenstände an der vorgesehenen Schweissstelle hinweist und ein Abheben des Schweissbalkens bewirkt. Entsprechend der Reaktionszeit eines Aktors, wird somit die Separation von Gegenständen frühzeitig an einer durch virtuelle Markierungen definierten Stelle des Förderelements detektiert und der Aktor vorbereitend angesteuert, damit er beispielsweise eine definierte Sollstellung einnimmt, wenn die betreffende virtuelle Markierung respektive das dort positionierte Produkt den Aktor erreicht.

In einer weiteren bevorzugten Ausführungsvariante umfasst das computergesteuerte Fördersystem mehrere Förderelemente, und eine virtuelle Markierung eines ersten Förderelements wird, beim Erreichen eines Übergabepunkts auf ein nachgeschaltetes zweites Förderelement, vom computergesteuerten Fördersystem auf das nachgeschaltete zweite Förderelement übertragen. Vorzugsweise weisen mindestens einige Antriebe der Förderelemente unterschiedliche Antriebsgeschwindigkeiten auf und das Erreichen des Übergabepunkts wird für eine virtuelle Markierung des ersten Förderelements basierend auf der aktuellen Position des ersten Förderelements bestimmt. Beim Übergabepunkt wird die virtuelle Markierung dem nachgeschalteten zweiten Förderelement zugeordnet, und die Markierungsposition der virtuellen Markierung wird abhängig von der aktuellen Position des zweiten nachgeschalteten Förderelements angepasst. In einer Variante bestimmt das computergesteuerte Fördersystem die Markierungsposition der virtuellen Markierung auf dem zweiten Förderelement abhängig von der Geschwindigkeit des ersten Förderelements, der Masse eines beförderten Produkts und/oder dem Typ des beförderten Produkts.

Neben einem computergesteuerten Fördersystem und einem computergesteuerten Förderverfahren bezieht sich die vorliegende Erfindung überdies auf eine Verwendung eines Computerprogrammprodukts in einem erfindungsgemäßen Fördersystem, wobei das Computerprogrammprodukt ein computerlesbares Medium mit Computercode umfasst, welcher eingerichtet ist, einen oder mehrere Prozessoren eines Steuerungscomputers des Fördersystems so zu steuern, dass eine aktuelle Position eines Förderelements durch den Steuerungscomputer erfasst wird, dass virtuelle Markierungen im Steuerungscomputer generiert und zugeordnet zum Förderelement gespeichert werden, wobei die virtuellen Markierungen jeweils eine Markierungsposition umfassen, die auf der aktuellen Position des Förderelements zum Zeitpunkt des Generierens basiert, dass im Steuerungscomputer gespeicherte virtuelle Markierungen gesucht werden, die zum Zeitpunkt des Suchens eine innerhalb eines definierten Streckenbereichs liegende Relativposition zum zugeordneten Förderelement aufweisen, und dass der Steuerungscomputer einen Aktor des Fördersystems abhängig davon ansteuert, ob virtuelle Markierungen im definierten Streckenbereich gefunden wurden.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1:: zeigt ein Blockdiagram, welches schematisch ein computergesteuertes Fördersystem mit mehreren Förderelementen illustriert.
- Figur 2:: zeigt ein Blockdiagram, welches schematisch eine Modellanordnung von mehreren Förderelementen mit Bezug zu einem Systemnullpunkt, sowie den Förderelementen zugeordnete virtuelle Markierungen illustriert.
- Figur 3:: zeigt ein Blockdiagram, welches schematisch eine Modellstruktur mit den Beziehungen zwischen Förderelementen, virtuellen Markierungen, einem Markierungsgenerator und einem Markierungssuchmodul illustriert.
- Figuren 4a bis 4d:: illustrieren die Generierung von virtuellen Markierungen, sowie deren Zuordnung zu einem Förderelement und Relativposition zur aktuellen Position des Förderelements.
- Figuren 5a bis 5d:: illustrieren die Zuordnung von virtuellen Markierungen beim Übergang von einem ersten Förderelement auf ein zweites Förderelement, jeweils mit der Relativposition der virtuellen Markierung bezüglich der aktuellen Position des zugeordneten Förderelements.
- Figur 6:: illustriert einen Streckenbereich des Fördersystems, der sich über mehrere Förderelemente hinweg erstreckt und zum Suchen von virtuellen Markierungen in diesem Bereich verwendet wird.
- Figur 7:: zeigt ein Blockdiagram, welches schematisch ein Beispiel eines Förderelements illustriert, das eingerichtet ist flexible flächige Gegenstände von einem festgetakteten Förderer und Verpackungsfolie von einer variablen Folienzuführung zu übernehmen, zum Versacken einem Schweissbalken zuzuführen, und die mit der Verpackungsfolie versackten Gegenstände einem Förderer mit variabler Taktrate zuzuführen.
- Figur 8:: zeigt ein Blockdiagram, welches schematisch ein Beispiel einer Bearbeitung von versackten Gegenständen abhängig von detektierten virtuellen Markierungen illustriert.
- Figur 9:: zeigt ein Flussdiagramm, welches ein Beispiel einer Sequenz von Schritten zur Ausführung eines computergesteuerten Förderverfahrens illustriert.

### Wege zur Ausführung der Erfindung

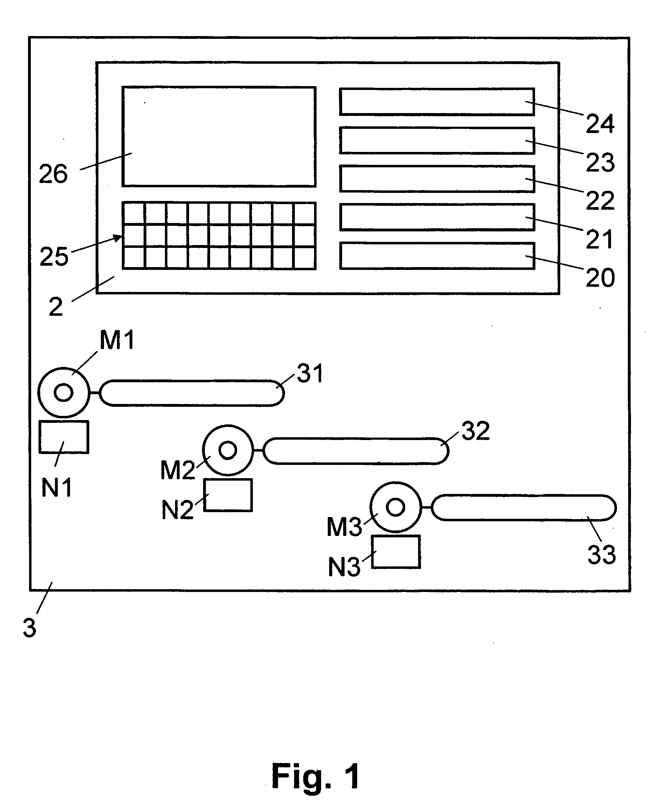

In der Figur 1 bezieht sich das Bezugszeichen 3 auf ein computergesteuertes Fördersystem mit mehreren Förderelementen 31, 32, 33, beispielsweise Transportbänder, Riemen- oder Kettenförderer, oder andere Förderelemente, welche flexible flächige Gegenstände, insbesondere Druckereierzeugnisse und weitere beigefügte Stückprodukte, z.B. CDs, über eine definierte Transportstrecke entlang einem geraden oder gekrümmten Transportweg befördern. Die Förderelemente 31, 32, 33 werden jeweils von einem Antrieb M1, M2, M3 (Elektromotor) angetrieben. Die Antriebe M1, M2, M3 umfassen jeweils einen elektronischen Positionsgeber N1, N2, N3, der die aktuelle Position des betreffenden Förderelements 31, 32, 33 in Echtzeit bestimmt und angibt. Die Geschwindigkeit der Antriebe M1, M2, M3 ist variabel und steuerbar. Abhängig von der Anwendung laufen die Förderelemente 31, 32, 33 mit unterschiedlichen, voneinander verschiedenen Geschwindigkeiten.

Wie in der Figur 1 schematisch dargestellt ist, umfasst das Fördersystem 3 einen (Steuerungs-) Computer 2 mit einem oder mehreren Prozessoren, z.B. ein PC für den industriellen Einsatz, Dateneingabeelementen 25, z.B. ein Keyboard oder Tasten, einer Anzeige 26, einem Datenspeicher 20 sowie verschiedenen funktionalen Modulen. Die funktionalen Module umfassen einen Markierungsgenerator 21, ein Markierungssuchmodul 22, ein Transfermodul 23 und ein Steuermodul 24. Die Dateneingabeelemente 25 und die Anzeige 26 können auch in einem berührungsempfindlichen Bildschirm kombiniert sein. Die funktionalen Module sind vorzugsweise als programmierte Softwaremodule ausgeführt, welche einen oder mehrere Prozessoren des Computers 2 steuern. Der Programmcode der funktionalen Module ist auf einem computerlesbaren Datenträger gespeichert, der fest oder entfernbar mit dem Computer 2 verbunden ist. Der Fachmann wird verstehen, dass die funktionalen Module in verschiedenen Ausführungsvarianten vollständig oder wenigstens teilweise als Hardwaremodule ausgeführt sein können.

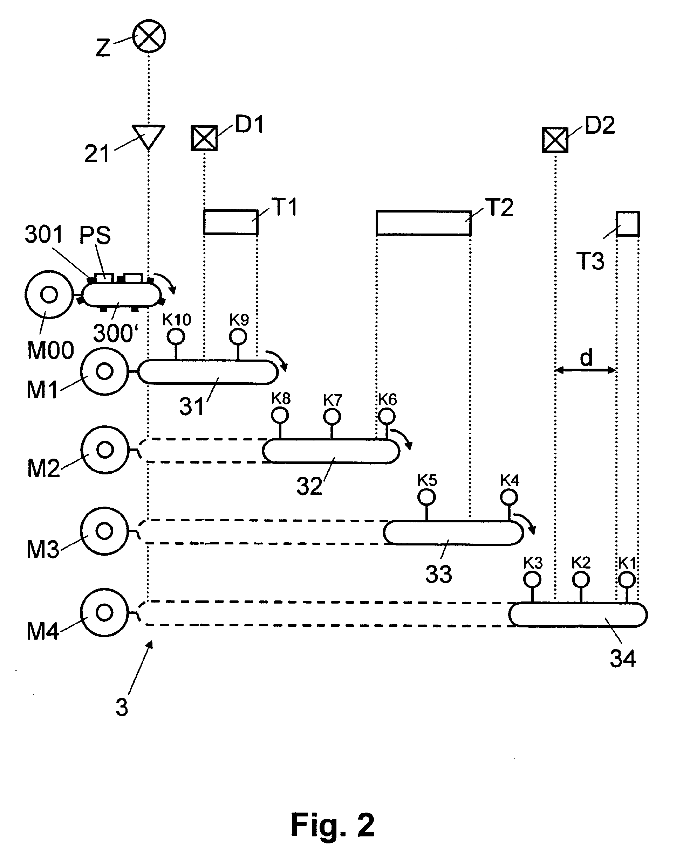

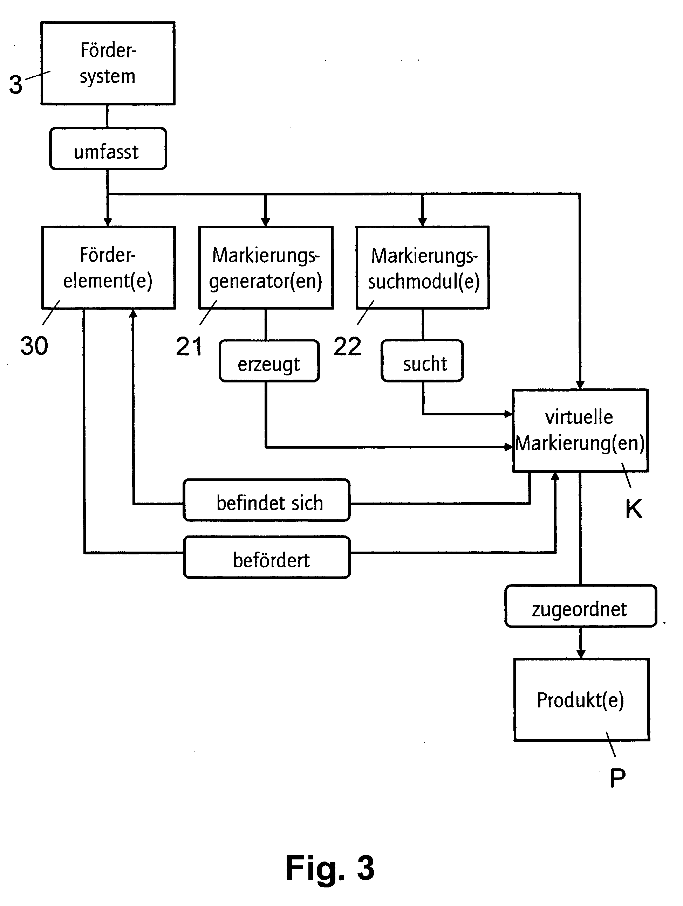

Wie in der Figur 3 dargestellt ist, umfasst das Fördersystem 3 ein oder mehrere Förderelemente 30, einen oder mehrere Markierungsgeneratoren 21, und eines oder mehrere Markierungssuchmodule 22. Je nach Ausführungsvariante wird ein Markierungsgenerator 21 in einem Modul ausgeführt, das virtuelle Markierungen an mehreren verschiedenen Generierungsstellen im Fördersystem 3 generiert, oder für jede dieser Generierungsstellen (Relativpositionen zu einem Systemnullpunkt Z, siehe z.B. Figur 2) wird ein separater Markierungsgenerator 21 instantiiert. In entsprechender Weise wird je nach Ausführungsvariante ein Markierungssuchmodul 22 in einem Modul ausgeführt, das virtuelle Markierungen in mehreren verschiedenen Streckenbereichen sucht, oder für jeden dieser Streckenbereiche wird ein separates Markierungssuchmodul 22 instantiiert.

Wie in der Figur 2 illustriert ist, werden die Förderelemente 31, 32, 33, 34 des Fördersystems 3 auf einen gemeinsamen Systemnullpunkt Z bezogen. Das heisst, jedem Förderelement 31, 32, 33, 34 wird eine (messbare) Distanz zum Systemnullpunkt Z zugeordnet und im Datenspeicher 20 gespeichert. Der Systemnullpunkt Z ist eine markante Stelle im System zu der alle beteiligen Elemente des Fördersystems 3 eine definierte, mit einem einfachen Messwerkzeug, z.B. Rollmeter, messbare Distanz haben. Die Förderelemente 31, 32, 33, 34 haben jeweils eine aktuelle Position, die im Systemnullpunkt Z ihren Ursprung hat und durch den Positionsgeber N1, N2, N3 des betreffenden Antriebs M1, M2, M3, M4 in Echtzeit schlupffrei erfasst und aktualisiert wird. Die aktuelle Position eines Förderelements 31, 32, 33, 34 ist als Punkt auf einem theoretisch endlosen Band zu sehen und wird beispielsweise in Millimeter, in einem anderen Mass, oder als rein numerischer Wert angegeben. Bewegt sich das Band so bewegt sich dieser Punkt vom Systemnullpunkt Z weg.

Wie in der Figur 2 dargestellt ist haben die Förderelemente 31, 32, 33, 34 eine definierte Reihenfolge untereinander (z.B. kaskadiert), wobei Produkte jeweils an einem Übergabepunkt von einem zuführenden Förderelement auf ein wegführendes Förderelement transferiert werden. Ein vom Antrieb M00 angetriebener Förderer 300' liefert flexible flächige Gegenstände PS, z.B. in einem durch Transportnocken 301 bestimmten festen Takt, im definierten Systemnullpunkt Z auf das Förderelement 31.

In der Figur 2 sind auch definierte Streckenbereiche T1, T2, T3 des Fördersystems 3 dargestellt, die einen Bereich mit einer definierten Position und einer definierten Länge aufweisen und als entsprechende Datenstruktur im Datenspeicher 20 gespeichert sind. Ein Streckenbereich T1, T2, T3 ist beispielsweise durch einen Anfangspunkt mit einer definierten Distanz zum Systemnullpunkt Z und einer Bereichslänge definiert. Ein Streckenbereich T1, T2, T3 kann statt durch eine Länge oder einen Anfangspunkt auch durch einen bezüglich dem Systemnullpunkt Z definierten Endpunkt definiert sein. Ein Streckenbereich kann sich über einen Bereich eines einzigen Förderelements (z.B. T1, T3) oder mehrere Förderelemente hinweg 31, 32, 33, 34 erstrecken (z.B. T2).

In der Figur 2 beziehen sich die Bezugszeichen D1 und D2 zudem auf Sensoren, z.B. Photosensoren, Lichtschranken oder Berührungssensoren, die in einer definierten Distanz zum Systemnullpunkt Z angeordnet sind und somit eine definierte Stelle eines Förderelements 31, 34 sensortechnisch überwachen.

Schliesslich ist in der Figur 2 schematisch auch ein Markierungsgenerator 21 dargestellt, dem eine definierte Distanz (Generierungsstelle) zum Systemnullpunkt Z zugeordnet ist, im vorliegenden Beispiel ist der Markierungsgenerator 21 die Distanz Null zugeordnet, so dass der Markierungsgenerator 21 (virtuell) an einer Generierungsstelle im Systemnullpunkt Z angeordnet ist. Wie nachfolgend beschrieben wird, generiert der Markierungsgenerator 21 virtuelle Markierungen, die jeweils einem Förderelement 31, 32, 33, 34 zugeordnet sind und eine Markierungsposition aufweisen. Die Markierungsposition *mp* basiert auf der aktuellen Position *p* des betreffenden Förderelements 31 und auf der definierten Position des Markierungsgenerators 21, beispielsweise auf der Distanz *g* des Markierungsgenerators 21 vom Anfangspunkt des Förderelements, *mp=p-g.* Bei der Generierung wird eine virtuelle Markierung K1-K10 jeweils mit ihrer Markierungsposition mp und dem zugeordneten Förderelement 31, 32, 33, 34 im Datenspeicher 20 gespeichert. Die virtuellen Markierungen K1-K10 werden als Datenstruktur gespeichert und repräsentieren physische Objekte, die real nicht auf dem betreffenden Förderelement, 31, 32, 33, 34 vorhanden sind, beispielsweise Noppen oder Nocken, oder physische Objektgrenzen, die zwar real noch nicht auf dem zugeordneten Förderelement 31, 32, 33, 34 existieren, aber an dieser Stelle vorgesehen sind respektive erwartet werden, beispielsweise Sackanfänge, die aus einer auf dem Förderelement 31, 32, 33, 34 transportierten Verpackungsfolie hergestellt werden, oder die tatsächlich real auf dem betreffenden Förderelement 31, 32, 33, 34 vorhanden sind, beispielsweise Gegenstände oder tatsächliche Sackanfänge.

Der Markierungsgenerator 21 generiert die virtuellen Markierungen K1-K10 gemäss vordefinierten Regeln respektive Kriterien. Zum Beispiel, werden dem Markierungsgenerator 21 produktspezifische Längenvorgaben gemacht und die virtuellen Markierungen K1-K10 werden jeweils mit einem entsprechenden Abstand voneinander generiert, d.h. eine virtuelle Markierung K1-K10 wird jeweils generiert, wenn sich die aktuelle Position des betreffenden Förderelements 31, 32, 33, 34 entsprechend der Längenvorgabe erhöht hat. In einem anderen Anwendungsbeispiel werden die virtuellen Markierungen K1-K10 gemäss einem vorgegeben Zeittakt generiert, d.h. nach einem definierten Zeitintervall wird eine virtuelle Markierung K1-K10 basierend auf der aktuellen Position des betreffenden Förderelements 31, 32, 33, 34 generiert. Die Generierung einer virtuellen Markierung K1-K10 kann auch durch andere definierte Ereignisse im Fördersystem 3 ausgelöst werden, beispielsweise abhängig von und/oder getriggert durch einen Sensor.

Im Beispiel der Figur 2 wurden vom Markierungsgenerator 21 zehn virtuelle Markierungen K1-K10 mit jeweils einer Markierungsposition *mp* generiert. Die virtuellen Markierungen K1-K10 verändern ihre Relativposition *pr* basierend auf der Bewegung der Förderelemente 31, 32, 33, 34 bezüglich dem Systemnullpunkt Z entsprechend der Erhöhung der aktuellen Position *p* des betreffenden Förderelements 31, 32, 33, 34, *pr=p-mp.* Das heisst die virtuellen Markierungen K1-K10 werden durch die Förderelemente 31, 32, 33, 34 virtuell transportiert werden. Zum Zeitpunkt des Beispiels der Figur 2 weisen die virtuellen Markierungen K1-K10 Relativpositionen zum Systemnullpunkt Z auf, die einer Position der virtuellen Markierungen K1, K2, K3 auf dem Förderelement 34, der virtuellen Markierungen K3, K4 auf dem Förderelement 33, der virtuellen Markierungen K6, K7, K8 auf dem Förderelement 32 und der virtuellen Markierungen K9, K10 auf dem Förderelement 31 entsprechen.

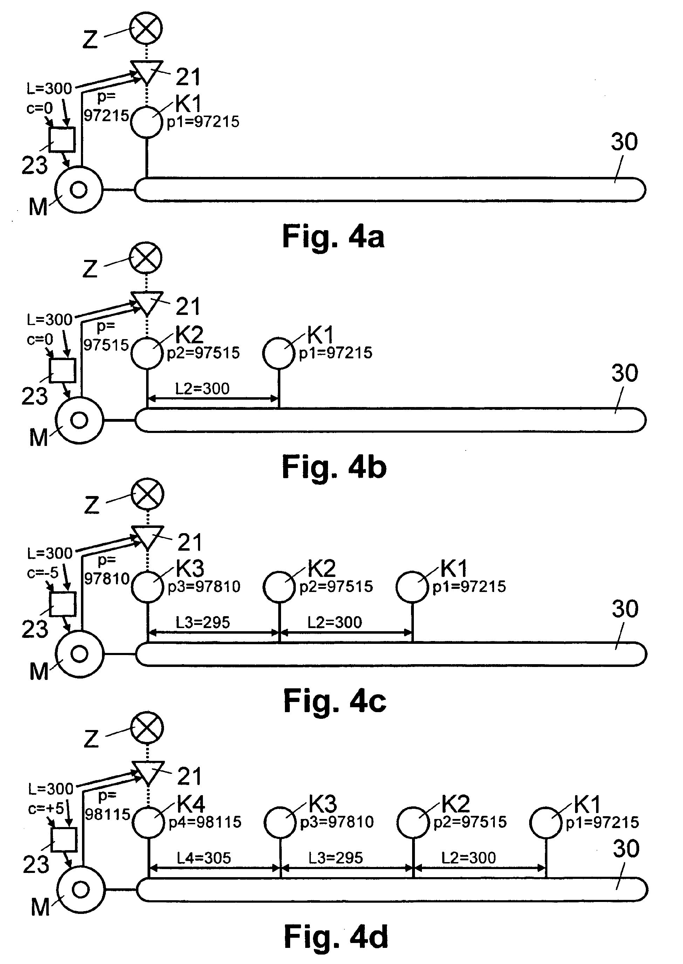

In der Figur 4a ist die Generierung einer virtuellen Markierung K1 durch den Markierungsgenerator 21 basierend auf der aktuellen Position p=97215mm des Förderelements 30 respektive des Antriebs M dargestellt. Anwendungsspezifisch wird in diesem Beispiel eine Längenvorgabe L=300mm für den regulären Abstand zwischen zwei virtuellen Markierungen vorgegeben. Die Längenvorgabe entspricht beispielsweise der Sacklänge eines Verpackungssackes (Distanz zwischen zwei Produktvorderkanten). Zudem wird laufend ein Korrekturwert c bestimmt, der beispielsweise die Abweichung der Lage eines tatsächlichen Produkts (z.B. eine Verpackungsfolie) von einer durch die virtuellen Markierungen definierten Sollposition angibt. Im Beispiel der Figur 4a, liegt keine Abweichung vor, der Korrekturwert ist c=0, das Steuermodul 24 steuert den Antrieb M an mit einer regulären Sollgeschwindigkeit zu laufen, und die Markierungsposition p1 entspricht der aktuellen Position des Antriebs M respektive des Förderelements 30, p1=97215mm.

Die Figur 4b illustriert die Generierung einer weiteren virtuellen Markierung K2 mit dem Abstand L2=300mm von der vorhergehenden Markierung K1. Wiederum liegt keine Abweichung vor und der Korrekturwert ist c=0, der Antrieb M läuft bei regulärer Sollgeschwindigkeit, und die Markierungsposition p2 entspricht der aktuellen Position p=97515mm des Antriebs M respektive des Förderelements 30, p2=97515mm.

Die Figur 4c illustriert die Generierung einer weiteren virtuellen Markierung K3. Im Beispiel der Figur 4c liegt nun eine Abweichung der Lage des tatsächlichen Produkts von der durch die virtuellen Markierungen K1 und/oder K2 definierten Sollposition vor, welche eine Korrektur um einen Korrekturwert von c=5mm bedingt. Bedingt durch den Korrekturwert c= 5mm wird der Vorschub des Förderelements 30 so reduziert, dass der Abstand der zu generierenden Markierung K3 von der vorhergehenden Markierung K2 um den Korrekturwert c auf L3=295mm reduziert wird. Damit die Synchronisierung, beispielsweise mit einem festgetakteten Förderer 300', gewahrt bleibt, steuert das Steuermodul 24 den Antrieb M an mit einer reduzierten Geschwindigkeit *vr* zu laufen, so dass der korrigierte Abstand L3=295mm in der gleichen Zeit gefahren wird, die es für das Abfahren des regulären Abstands gemäss der Längenvorgabe L=300mm bei der regulären Sollgeschwindigkeit vs braucht, *vr=vs*L3*/*L.* Die Markierungsposition p3 entspricht der aktuellen Position des Antriebs M respektive des Förderelements 30, p3=97810mm.

Die Figur 4d illustriert die Generierung einer weiteren virtuellen Markierung K4. Im Beispiel der Figur 4d liegt eine Abweichung der Lage des tatsächlichen Produkts von der durch die virtuellen Markierungen K1-K3 definierten Sollposition vor, welche eine Korrektur um einen Korrekturwert von c=+5mm bedingt. Bedingt durch den Korrekturwert c=+5mm wird der Vorschub des Förderelements 30 so erhöht, dass der Abstand der zu generierenden Markierung K4 von der vorhergehenden Markierung K3 um den Korrekturwert c auf L4=305mm erhöht wird. Damit die Synchronisierung gewahrt bleibt, steuert das Steuermodul 24 den Antrieb M an mit einer erhöhten Geschwindigkeit *vh* zu laufen, so dass der korrigierte Abstand L4=305mm in der gleichen Zeit gefahren wird, die es für das Abfahren des regulären Abstands gemäss der Längenvorgabe L=300mm bei der regulären *Sollgeschwindigkeit vs* braucht, *vh=vs*L4*/*L.* Die Markierungsposition p4 entspricht der aktuellen Position des Antriebs M respektive des Förderelements 30, p4=98115mm.

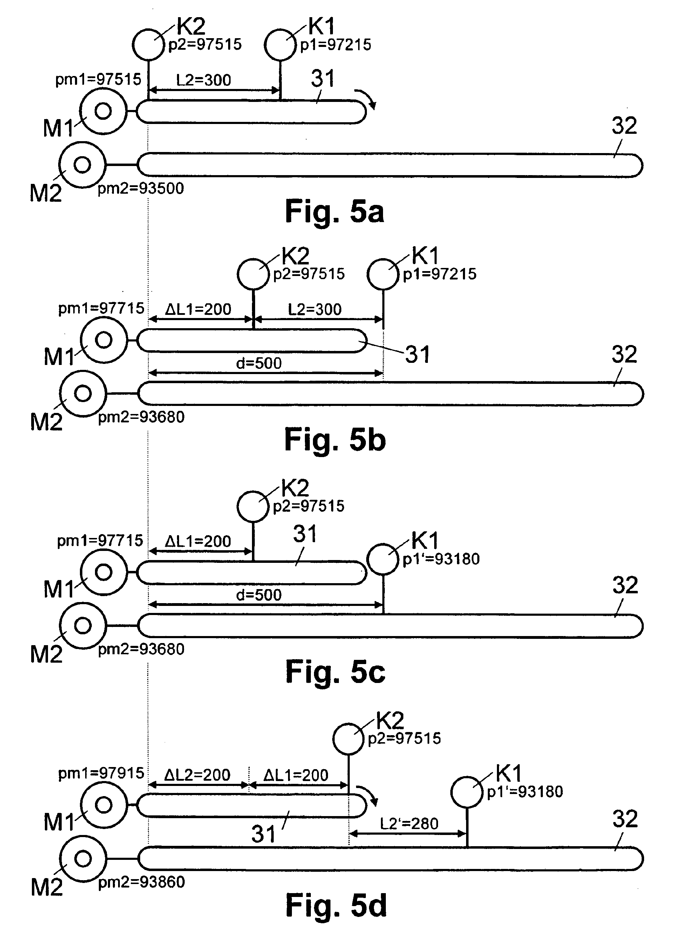

In den Figuren 5a bis 5d wird die Funktion des Transfermoduls 23 sowie die Behandlung von virtuellen Markierungen K1, K2 beim Übergang von einem zuführenden Förderelement 31 auf ein wegführendes Förderelement 32 illustriert. Der Übergangspunkt vom zuführenden Förderelement 31 zum wegführenden Förderelement 32 wird bei einer Distanz d=500mm vom Anfangspunkt der Förderelemente 31, 32 angenommen.

In der Ausgangslage der Figur 5a befindet sich das vom Antrieb M1 angetriebene Förderelement 31 an der Position pm1=97515mm, und das das vom Antrieb M2 angetriebene Förderelement 32 befindet sich an der Position pm2=93500mm. Für das Beispiel der Figuren 5a-5d wird angenommen, dass das wegführende Förderelement 32 mit einem Faktor f=0.9 an das zuführende Förderelement 31 gekoppelt ist, das heisst, das wegführende Förderelement 32 läuft langsamer als das zuführende Förderelement 31, so dass beispielsweise bei einer Bewegung des zuführenden Förderelements 31 um 200mm sich das wegführende Förderelement 32 um 180mm bewegt. In dieser Ausgangslage existieren im Datenspeicher 20 zwei dem zuführenden Förderelement 31 zugeordnete virtuelle Markierungen K1, K2 mit den Markierungspositionen p1=97215mm respektive p2=97515mm, was einem gegenseitigen Abstand von L2=300mm entspricht.

In der Situation gemäss Figur 5b hat sich das zuführende Förderelement 31 um ΔL1=200mm bewegt, was einer aktuellen Position des zuführenden Förderelements 31 von pm1=97715mm entspricht. In der gleichen Zeit hat sich das wegführende Förderelement 32 um *ΔL1'=f*ΔL1=180mm* bewegt, was einer aktuellen Position des wegführenden Förderelements 32 von pm1=93680mm entspricht. Die Relativposition pr1 der virtuellen Markierung K1 ergibt sich aus seiner Markierungsposition p1=97215mm und aus der aktuellen Position pm1 des zuführenden Förderelements 31, *pr1=pm1-p1=500mm.* Das heisst die virtuelle Markierung K1 hat in der Situation gemäss Figur 5b den Übergangspunkt vom zuführenden Förderelement 31 zum wegführenden Förderelement 32 erreicht (d=500mm), wodurch das Transfermodul 23 aktiviert wird.

Wie in der Figur 5c schematisch illustriert wird, transferiert das Transfermodul 23 die virtuelle Markierung K1 vom zuführenden Förderelement 31 zum wegführenden Förderelement 32. Dabei wird die virtuelle Markierung K1 im Datenspeicher 20 dem wegführenden Förderelement 32 zugeordnet und ihre Markierungsposition *p1'* bezüglich der aktuellen Position pm2=93680mm des wegführenden Förderelements 32 bestimmt, *p1'=pm1-d=93180mm,* und in der Datenstruktur der virtuellen Markierung K1 gespeichert. In einer Ausführungsvariante wird die Markierungsposition *p1'* der virtuellen Markierung K1 beim Übergang vom zuführenden Förderelement 31 auf das wegführende Förderelement 32 zudem (mit einer Funktion *f*) abhängig von der Masse des beförderten Produkts *mp,* dem Type *tp* des beförderten Produkts und/oder der Geschwindigkeit *vz* des zuführenden Förderelements 31 definiert, *p1'=pm2-d*+*f(mp, tp, vz).*

In der Situation gemäss Figur 5d hat sich das zuführende Förderelement 31 um weitere ΔL2=200mm bewegt, was einer aktuellen Position des zuführenden Förderelements 31 von pm1=97915mm entspricht. In der gleichen Zeit hat sich das wegführende Förderelement 32 wiederum um *ΔL2'=f*ΔL2=180mm* bewegt, was einer aktuellen Position des wegführenden Förderelements 32 von pm2=93860mm entspricht. Die Relativposition pr2 der virtuellen Markierung K2 ergibt sich aus seiner Markierungsposition p2=97515mm und aus der aktuellen Position *pm1* des zuführenden Förderelements 31, *pr2=pm1-p2=400mm.* Die Relativposition *pr1'* der virtuellen Markierung K1 ergibt sich aus seiner Markierungsposition p1'=93180mm und aus der aktuellen Position pm2 des wegführenden Förderelements 32, *pr1'=pm2-p1'=680mm.* Das heisst der Abstand zwischen den virtuellen Markierungen K1 und K2 hat sich auf Grund der langsameren Geschwindigkeit des wegführenden Förderelements 32 vom ursprünglichen Wert L2=300mm auf *L2'=pr1'=pr2=280mm* verkürzt.

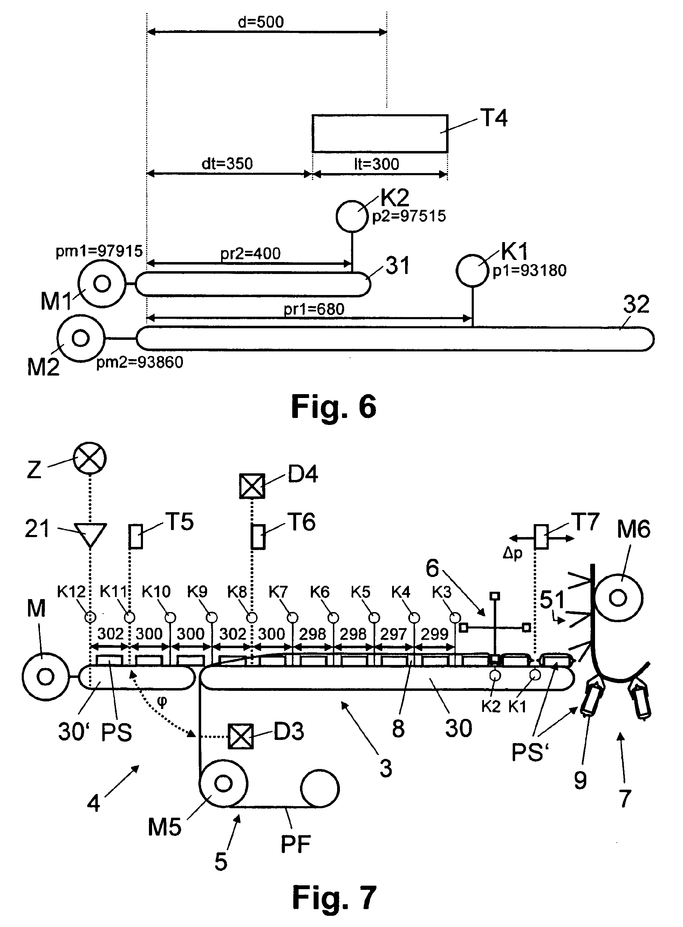

In der Figur 6 wird die Funktion des Markierungssuchmoduls 22 am Beispiel eines Streckenbereichs T4 illustriert, der sich im Übergabebereich bei d=500mm über zwei Förderelemente 31, 32 erstreckt. Der Streckenbereich T4 weist einen Anfangspunkt auf, der eine Distanz dt=350mm zum Systemnullpunkt und eine Bereichslänge lt=300mm aufweist, das heisst der Streckenbereich T4 ist mit Bezug zum Systemnullpunkt Z durch den Bereich [300mm, 650mm] definiert. Das Markierungssuchmodul 22 ist eingerichtet, bei einer Aktualisierung der Positionen der Förderelemente 31, 32 des Fördersystems 3 virtuelle Markierungen K1, K2 zu identifizieren, die innerhalb eines der definierten Streckenbereichs T4 des Förderersystems 3 liegen. Das heisst, das Markierungssuchmodul 22 sucht für die definierten, im Datenspeicher 20 gespeicherten Streckenbereiche T4 des Förderersystems 3 im Datenspeicher 20 jeweils virtuellen Markierungen K1, K2, welche eine Markierungsposition aufweisen, die zum aktuellen Zeitpunkt des Suchens innerhalb des betreffenden Streckenbereichs T4 liegt. Zu diesem Zweck werden die aktuellen Relativpositionen der virtuellen Markierungen K1, K2 mit Bezug zum Systemnullpunkt Z bestimmt. Im Beispiel der Figur 6 ergibt sich für die aktuelle Relativposition pr1 der virtuellen Markierung K1 basierend auf der aktuellen Position pm2 des zugeordneten Förderelements 32 ein Wert von *pr1=pm2-p1=680mm;* für die aktuelle Relativposition *pr2* der virtuellen Markierung K2 ergibt sich basierend auf der aktuellen Position pm1 des zugeordneten Förderelements 31 ein Wert von *pr2=pm1-p2=400mm.* Somit liegt die virtuelle Markierung K1 ausserhalb und die virtuelle Markierung K2 innerhalb des Streckenbereichs T2, und das Markierungssuchmoduls 22 liefert dem Steuermodul 24 die virtuelle Markierung K2 respektive deren Identifizierung zur weiteren Verarbeitung.

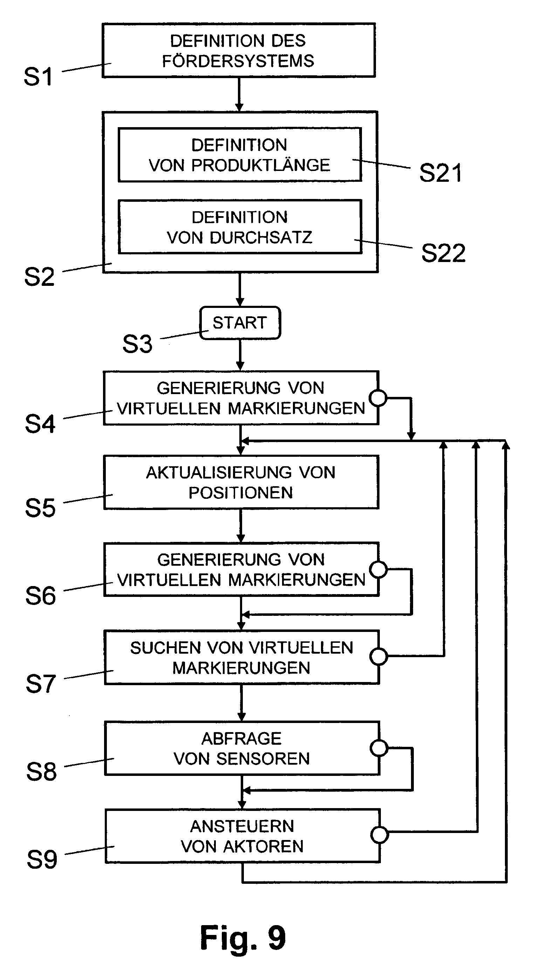

In den folgenden Abschnitten werden eine beispielhafte Sequenz von Schritten zur Ausführung des computergesteuerten Förderverfahrens und ein Anwendungsbeispiel mit Bezug zu den Figuren 7 und 9 beschrieben.

Das in Figur 7 dargestellte Anwendungsbeispiel betrifft eine Folienverpackungsmaschine 4 für die Versackung von flexiblen flächigen Gegenständen PS, beispielsweise Stapel von Druckereierzeugnissen. Die Folienverpackungsmaschine 4 umfasst ein Fördersystem 3 respektive ein Teil eines Fördersystems, welches zwei mit gleicher Geschwindigkeit gekoppelte Förderelemente 30 und 30' umfasst, die von einem oder mehreren Antrieben M angetrieben werden. Dem Förderelement 30 wird von einem durch Antrieb M5 angetriebenen Folienzuführer 5 eine Verpackungsfolie PF kontinuierlich zugeführt, welche auf das Förderelement 30 zu liegen kommt. Die Verpackungsfolie PF weist Folienmarkierungen auf, die in regelmässigen Abständen, z.B. 300mm, angebracht, z.B. aufgedruckt, sind und eine Bestimmung der Lage der Verpackungsfolie PF in ihrer Längsrichtung ermöglichen. Ein in der Figur 7 nicht dargestellter, fest getakteter Förderer 300' (siehe Figur 2) führt dem Förderelement 30' die Gegenstände PS jeweils mit einer definierten Distanz von beispielsweise 300mm zwischen den Transportnocken 301 (respektive von Produktbeginn zu Produktbeginn, oder von Produktvorderkante zu Produktvorderkante). Vom Förderelement 30' werden die Gegenstände PS dem Förderelement 30 zugeführt, wo sie auf die Verpackungsfolie PF zu liegen kommen. Die Verpackungsfolie PF wird so um die Gegenstände PS geschlagen, dass sich um die Gegenstände PS ein kontinuierlicher Folienschlauch 8 bildet. Der Folienschlauch 8 wird vom Schweissbalken 6 zu Säcken 9 verschweisst, so dass jeder Gegenstand PS in einen individuellen, beidseitig verschweissten Sack 9 verpackt wird (auf die Verschweissung einer kontinuierlichen Längsnaht wird hier nicht eingegangen). Die (in den verschweissten Säcken 9) verpackten Gegenstände PS' werden von einem dem Förderelement nachgelagerten Förderer 7 weggeführt. Der Förderer 7 wird vom Antrieb M6 mit einer verstellbaren Taktrate angetrieben, wobei mit jedem Takt ein verpackter Gegenstand PS' von einer Klammer 51 gefasst und wegbefördert wird.

In der Figur 9 beziehen sich die Bezugszeichen S1 und S2 auf vorbereitende Schritte zur Ausführung des computergesteuerten Förderverfahrens.

Im Schritt S1 wird das Fördersystem 3 durch Eingabe und Speicherung von Systemkomponenten, Systemparametern und Systemregeln definiert, beispielsweise über eine grafische (GUI-) Benutzeroberfläche. Im Schritt S1 werden für das Fördersystem 3 insbesondere eines oder mehrere Förderelemente 30, ein oder mehrere Markierungsgeneratoren 21, und eines oder mehrere Markierungssuchmodule 22 für einen oder mehrere Streckenbereiche T5, T6, T7, als Systemkomponenten respektive Systemparameter definiert. Die Förderelemente 30, 30' werden durch ihre Länge und Distanz zum Systemnullpunkt Z definiert. Zudem wird die Anordnung der Förderelemente 30, 30' sowie deren geschwindigkeitsmässige gegenseitige Kopplung und optional ein Förderelementtyp definiert. Die Anordnung der Förderelemente 30, 30' umfasst beispielsweise eine oder mehrere sequentielle Reihenfolgen, Verästelungen und/oder Zusammenführungen. Die Streckenbereiche T5, T6, T7 werden wie oben erwähnt durch ihre Position und Bereichslänge definiert. In einer Variante wird die Position eines Streckenbereichs T5, T6, T7 zudem als variable Position Δp an die (aktuelle) Geschwindigkeit eines zugeordneten Förderelements 30 gebunden. Die Markierungsgeneratoren 21 werden durch ihre Distanz zum Systemnullpunkt Z sowie durch Regeln für die Erzeugung von virtuellen Markierungen K1-K12 definiert. Eine Regel definiert beispielsweise die Erzeugung der virtuellen Markierungen K1-K12, abhängig von der aktuellen Position eines zugeordneten Förderelements 30, mit einem produktspezifischen Abstand. Die Erzeugung der virtuellen Markierungen K1-K12 wird optional mit einer aktuellen Produktposition abgeglichen/synchronisiert, z.B. abhängig vom Output eines Sensors und/oder der Präsenz einer virtuellen Markierung in einem definierten Streckenbereich T5.

Im Schritt S2 werden betriebsspezifische Parameter eingegeben und im Datenspeicher 20 gespeichert. Diese Parameter können auch während dem Betrieb durch eine autorisierte Person dynamisch verändert werden. Im Schritt S21 wird eine produktspezifische Länge erfasst, im vorliegenden Beispiel 300mm für die Distanz in der Zuführung der Gegenstände PS und den entsprechenden Abstand der Folienmarkierungen. Im Schritt S22 wird die Betriebsgeschwindigkeit respektive der Durchsatz erfasst, beispielsweise die Anzahl Gegenstände PS pro Zeiteinheit, z.B. 30000 Gegenstände pro Stunde.

Im Schritt S3 wird das Fördersystem 3 aufgestartet und der Betrieb aufgenommen. Dabei wird der Systemnullpunkt Z vorzugsweise auf einen Startpunkt gesetzt, z.B. auf Null.

Im Schritt S4 wird zunächst überprüft, ob im Startpunkt bereits virtuelle Markierungen K1-K12 durch mindestens einen der Markierungsgenerator 21 generiert werden sollen. Falls dem nicht so ist, fährt das Förderverfahren im Schritt S5 fort. Andernfalls werden die entsprechenden virtuellen Markierungen K1 durch den betreffenden Markierungsgenerator 21 basierend auf der aktuellen Position des zugeordneten Förderelements 30 und der Relativposition des betreffenden Markierungsgenerators 21 erzeugt und im Datenspeicher 20 gespeichert. Im vorliegenden Beispiel repräsentieren die virtuellen Markierungen K1-K12 jeweils Sackanfänge (respektive Sackenden) der Säcke 9, die um die Gegenstände PS gebildet werden.

Im Schritt S5 werden die aktuellen Positionen der Förderelemente 30 erfasst, beispielsweise periodisch gemäss einem definierten Zeitintervall oder bei jeder Erhöhung eines Positionsgebers N1, N2, N3 um einen definierten Wert (Inkrement).

Im Schritt S6 wird überprüft, ob bei den aktuellen Positionen der Förderelemente 30 virtuelle Markierungen K1-K12 durch mindestens einen der Markierungsgenerator 21 generiert werden sollen. Falls dem nicht so ist, fährt das Förderverfahren im Schritt S5 mit der nächsten Aktualisierung der aktuellen Positionen fort. Andernfalls werden die entsprechenden virtuellen Markierungen K1-K12 wie oben beschrieben erzeugt und im Datenspeicher 20 gespeichert, gegebenenfalls unter Berücksichtigung von aktuellen Korrekturwerten c. Im vorliegenden Beispiel werden die virtuellen Markierungen K1-K12 jeweils mit einem gegenseitigen Abstand erzeugt, welcher der im Schritt S21 definierten produktspezifischen Länge von 300mm entspricht. Dabei werden jedoch Korrekturwerte c berücksichtigt, wie später beschrieben wird.

Im Schritt S7 sucht das Markierungssuchmodul 22 virtuelle Markierungen K1-K12, die eine aktuelle Relativposition innerhalb eines definierten Streckenbereichs T5, T6, T7 aufweisen. In einer Ausführungsvariante werden die berechneten aktuellen Relativpositionen der virtuellen Markierungen K1-K12 im Datenspeicher 20 gespeichert. Zudem werden virtuelle Markierungen K1-K12 deren aktuelle Relativposition ausserhalb einer definierten Gesamtlänge des Fördersystems 3 liegen im Datenspeicher 20 gelöscht, da sie das Fördersystem 3 respektive den Teil eines Fördersystems verlassen. Falls keine innerhalb der Streckenabschnitte T5, T6, T7 liegenden virtuellen Markierungen K1-K12 gefunden werden, fährt das Förderverfahren im Schritt S5 mit der nächsten Aktualisierung der aktuellen Positionen fort. Andernfalls fährt das Förderverfahren im Schritt S8 fort. Im vorliegenden Beispiel gemäss Figur 7 findet das Markierungssuchmodul 22 die virtuellen Markierungen K11 im Streckenbereich T5, K8 im Streckenbereich T6 und K1 im Streckenbereich T7.

Im Schritt S8 überprüft das Steuermodul 24, ob den im Schritt S7 gefundenen virtuellen Markierungen K1-K12 Sensoren zugeordnet sind, die zur Weiterbehandlung der gefundenen virtuellen Markierungen K1-K12 benötigt werden. Falls den gefundenen virtuellen Markierungen K keine zu berücksichtigenden Sensoren D3, D4 zugeordnet sind, fährt das Förderverfahren im Schritt S9 fort. Andernfalls, bezieht das Steuermodul 24 die aktuellen Sensorwerte der betreffenden Sensoren D3, D4 und fährt im Schritt S9 fort. Im vorliegenden Beispiel ist dem Streckenbereich T5 der Sensor D3, und dem Streckenbereich T6 der Sensor D4 zugeordnet. Der Fachmann wird verstehen, dass in einer alternativen Ausführungsvariante ein Sensor die Suche von virtuellen Markierungen in einem zugeordneten Streckenbereich triggern kann. In einer Ausführungsvariante triggert ein Sensor die Generierung einer oder mehreren virtuellen Markierungen (Aktivierung des Markierungsgenerators 21), welche beispielsweise die Position eines sensortechnisch detektierten Gegenstands repräsentieren.

Im vorliegenden Beispiel ist der Sensor D3 beispielsweise als Photosensor/Lichtschranke ausgeführt und eingerichtet, die auf der Verpackungsfolie PF angebrachten Folienmarkierungen zu detektieren, um die Lage der Verpackungsfolie PF in ihrer Längsrichtung zu bestimmen. Der Sensor D3 ist so positioniert, dass er die Folienmarkierung an einer Stelle detektiert, die, um den Winkel ϕ "hochgeklappt", auf dem Förderelement 30' der Position eines erwarteten Sackanfangs (K11) zwischen zwei zugeführten Gegenstände PS entspricht. Die Position der Folienmarke ist somit durch die Relativposition des Sensors D3 zum Anfang des Förderelements 30' (hier Systemnullpunkt Z) und der aktuellen Position des Antriebs M bestimmt.

Im vorliegenden Beispiel ist der Sensor D4 beispielsweise als Lichtschranke ausgeführt und eingerichtet, zu detektieren, ob an der betreffenden Stelle die Gegenstände PS voneinander getrennt sind, und die Verpackungsfolie PF daher im Leerbereich zwischen den Gegenständen PS verschweisst werden kann. Der Sensor D4 ist innerhalb Streckenbereich T6 positioniert (z.B. zentriert), wo erwartungsgemäss ein Sackanfang (K8) zu liegen kommt.

Im Schritt S9 überprüft das Steuermodul 24, ob basierend auf den im Schritt S7 gefundenen virtuellen Markierungen K1-K12 und/oder den im Schritt S8 erfassten Sensorwerten, Aktoren des Fördersystems 3 angesteuert werden sollen, z.B. eine Funktionseinheit, die aktiviert oder deaktiviert werden soll, oder Antriebe von Förderelementen, deren Geschwindigkeit oder Betriebstakt verändert werden soll, und/oder ob für die Erzeugung der nächsten virtuellen Markierungen K1-K12 eines Förderelements 30 ein Korrekturwert c definiert und gespeichert werden soll. Gegebenenfalls werden die betreffenden Aktoren im Schritt S9 angesteuert respektive Korrekturwerte c berechnet und abgespeichert, und das Förderverfahren fährt im Schritt S5 mit der nächsten Aktualisierung der aktuellen Positionen fort. Nachfolgend werden einige Beispiele für die von detektierten virtuellen Markierungen abhängige Steuerung von Aktoren beschrieben.

Wenn im Beispiel der Figur 7 die im Streckenbereich T5 gefundene virtuelle Markierung K11 von der durch den Sensor D3 detektierten Position der Folienmarkierung abweicht, bestimmt das Steuermodul 24 im Schritt S9 einen entsprechenden Korrekturwert c, im vorliegenden Beispiel c=+2mm. Das Steuermodul 24 steuert den Antrieb M als Aktor im Schritt S9 so an, dass die Förderelemente 30, 30' mit einer erhöhten Geschwindigkeit eine auf 302mm erhöhte Länge in der Zeit fahren, in der bei der regulären Sollgeschwindigkeit 300mm gefahren werden, wie im Zusammenhang mit Figur 4d beschrieben wurde. Somit wird die nächste im Schritt S6 generierte virtuelle Markierung K12 einen Abstand von 302mm zur vorhergehenden virtuellen Markierung K11 aufweisen. Bei einem negativen Korrekturwert, z.B. c=3mm, würde das Steuermodul 24 den Antrieb M als Aktor so ansteuern, dass die Förderelemente 30, 30' mit einer reduzierten Geschwindigkeit eine kleinere Länge von 297mm in der Zeit fahren, in der bei der regulären Sollgeschwindigkeit 300mm gefahren werden, wie im Zusammenhang mit Figur 4c beschrieben wurde. Dadurch würde die virtuelle Markierung K12 mit einem Abstand von 297mm zur virtuellen Markierung K11 generiert. Der Sensor D3 und der zugeordnete Streckenbereich T5 ermöglichen somit auf der Basis der virtuellen Markierungen K1-K12 die Verpackungsfolie FP respektive die darauf angebrachten Folienmarkierungen mit dem festen Takt der zugeführten Gegenstände PS zu synchronisieren.

Wenn zudem im Beispiel der Figur 7 der Sensor D4 detektiert, dass bei der im Streckenbereich T6 gefundenen virtuellen Markierung K8 keine Trennung vorliegt, d.h. ein Gegenstand PS liegt fälschlicherweise an der Stelle, wo normalerweise ein Sackanfang zu liegen käme, steuert das Steuermodul 24 im Schritt S9 den Schweissbalken 6 als Aktor vorbereitend so an, dass der Schweissbalken 6 abgehoben wird, wenn die virtuelle Markierung K8 beim Schweissbalken 6 eintrifft. Zudem werden im Datenspeicher 20 den betreffenden virtuellen Markierungen K8 jeweils ein entsprechender Fehlerwert zugeordnet gespeichert, der anzeigt, dass bei den virtuellen Markierungen K8 keine Trennung vorliegt. Der Sensor D4 und der zugeordnete Streckenbereich T6 ermöglichen somit auf der Basis der virtuellen Markierungen K1-K12 eine Verschweissung der Folie durch den Schweissbalken 6 zu verhindern, wenn die Gegenstände PS nicht genügend voneinander getrennt sind. In einer Ausführungsvariante sind der Sensor D4 und der zugeordnete Streckenbereich T6 beim Förderelement 30' angeordnet.

Auf der Basis der im Streckenbereich T7 gefundenen virtuellen Markierungen K1-K12, bestimmt das Steuermodul 24 im Beispiel der Figur 7 den Ist-Takt der verschweissten Säcke 9, die vom Förderelement 30 zum Förderer 7 transportiert werden. Basierend auf dem bestimmten Ist-Takt bestimmt das Steuermodul 24 im Schritt S9 einen Solltakt für den Förderer 7 und steuert den Antrieb M6 als Aktor an, den Förderer mit dem bestimmten Solltakt anzutreiben. Dazu wird jeweils die Markierungsposition der betreffenden virtuellen Markierung K1-K12 berücksichtigt; in einer Ausführungsvariante wird der Streckenbereich T7 mit einer derart kurzen Bereichslänge definiert, dass es für die Bestimmung des Solltakts genügt, die Präsenz einer virtuellen Markierung K1-K12 im Streckenbereich T7 zu detektieren.

Zudem bestimmt das Steuermodul 24 im Beispiel der Figur 7 basierend auf den im Datenspeicher 20 gespeicherten Fehlerwerten, ob bei der im Streckenbereich T7 (oder in einem anderen dafür vorgesehenen Streckenbereich) gefundenen virtuellen Markierungen K1 eine vom Sensor D4 vorgängig detektierte ungenügende oder fehlende Trennung vorliegt. Wenn eine fehlende Trennung vorliegt, steuert das Steuermodul 24 im Schritt S9 die betreffende Klammer 51 als Aktor so an, dass die betreffende Klammer 51 geschlossen respektive nicht geöffnet wird, so dass der ungetrennte Sack mit den ungetrennten Gegenständen PS von der Klammer nicht ergriffen und als Ausschuss abgesondert wird. Entsprechend der Schaltzeit der Klammern 51 wird dabei die variable Position Δp des Streckenbereichs T7 an die (aktuelle) Geschwindigkeit des Förderelements 30 angepasst, um virtuelle Markierungen K1-K12 mit einer fehlenden Trennung ausreichend früh zu Detektieren. In einer Ausführungsvariante ist die Folienverpackungsmaschine 4 so eingerichtet, dass auch das Fehlen von Gegenständen PS an den vorgesehenen Stellen detektiert und erfasst wird, um leere Säcke, die durch den Schweissbalken 6 auch bei fehlenden Gegenständen PS verschweisst werden, ebenfalls auszusondern und nicht den Klammern 51 des Förderers 7 zu übergeben.

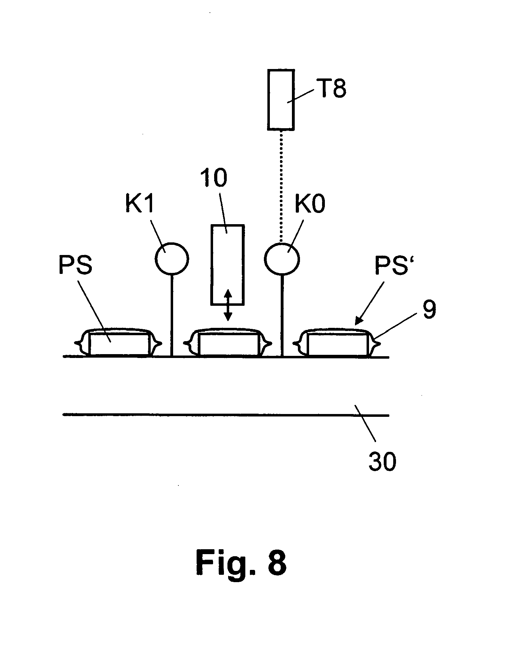

Figur 8 illustriert ein weiteres Beispiel einer von detektierten virtuellen Markierungen abhängigen Steuerung von Aktoren. Sobald im Streckenbereich T8 eine virtuelle Markierung K0 gefunden wird, steuert das Steuermodul 24 im Schritt S9 den Aktor zur Aktivierung (oder Deaktivierung) der Funktionseinheit 10 an. Die Funktionseinheit 10 ist eine Bearbeitungseinheit beispielsweise ein Adressierungsapplikator, der auf einem Gegenstand PS oder auf einem versackten Gegenstand PS' eine Adresse anbringt, beispielsweise durch Bedruckung. Die Bearbeitung (Bedruckung, Adressierung) des Gegenstands PS respektive des versackten Gegenstands PS' erfolgt somit automatisch durch die Funktionseinheit 10 sobald die virtuelle Markierung K0 den Streckenbereich T8 erreicht.

## Patentansprüche

1. Computergesteuertes Fördersystem (3), umfassend mindestens ein Förderelement (30, 31, 32, 33, 34) mit einem Antrieb (M, M1, M2, M3, M4) und einem Positionsgeber (N1, N2, N3) zum Angeben einer aktuellen Position (p, pm1, pm2) des Förderelements (30, 31, 32, 33, 34), **gekennzeichnet durch**
mindestens einen Markierungsgenerator (21) zum Generieren von virtuellen Markierungen (K0-K12) zugeordnet zum Förderelement (30, 31, 32, 33, 34), wobei die virtuellen Markierungen (K0-K12) jeweils mit einer Markierungsposition gespeichert werden, die auf der aktuellen Position (p, pm1, pm2) des Förderelements (30, 31, 32, 33, 34) zum Zeitpunkt des Generierens basiert,
mindestens ein Markierungssuchmodul (22) zum Suchen von virtuellen Markierungen (K0-K12), die zum Zeitpunkt des Suchens eine innerhalb eines definierten Streckenbereichs (T1-T8) liegende Relativposition zum zugeordneten Förderelement (30, 31, 32, 33, 34) aufweisen, und
ein Steuermodul (24), welches eingerichtet ist, einen Aktor des Fördersystems (3) abhängig davon anzusteuern, ob vom Markierungssuchmoduf (22) virtuelle Markierungen (K0-K12) im definierten Streckenbereich (T1-T8) gefunden wurden.

2. Fördersystem (3) nach Anspruch 1, **dadurch gekennzeichnet, dass** der Markierungsgenerator (21) eingerichtet ist, die virtuellen Markierungen (K0-K12) mit produktspezifischen Abständen zwischen den Markierungspositionen zu generieren, dass das Fördersystem (3) einen Sensor (D3, D4) zur Bestimmung einer aktuellen Produktposition eines auf dem Förderelement (30, 31, 32, 33, 34) beförderten Produkts (PS, PF) umfasst, und dass der Markierungsgenerator (21) eingerichtet ist, beim Generieren einer virtuellen Markierung (K0-K12) jeweils die Markierungsposition abhängig von der aktuellen Produktposition zu variieren.

3. Fördersystem (3) nach einem der Ansprüche 1 oder 2, **dadurch gekennzeichnet, dass** dem Förderelement (30) ein Förderer (7) mit verstellbarer Taktrate zum Wegführen von Produkten nachgelagert ist, und dass das Steuermodul (24) eingerichtet ist, abhängig von Markierungspositionen von im definierten Streckenbereich (T7) gefundenen virtuellen Markierungen (K1-K12) einen Solltakt zu bestimmen, und den nachgelagerten Förderer (7) mit dem Solltakt anzusteuern.

4. Fördersystem (3) nach einem der Ansprüche 1 bis 3, **dadurch gekennzeichnet, dass** der Antrieb (M, M1, M2, M3, M4) des Förderelements (30, 31, 32, 33, 34) eine verstellbare Geschwindigkeit aufweist, und dass das Steuermodul (24) eingerichtet ist, den Streckenbereich (T1-T8) abhängig von der Geschwindigkeit des Förderelements (30, 31, 32, 33, 34) zu definieren.

5. Fördersystem (3) nach einem der Ansprüche 1 bis 4, **dadurch gekennzeichnet, dass** das Fördersystem (3) einen Sensor (D4) zur Detektion eines auf dem Förderelement (30) beförderten Produkts (PS) umfasst, dass der Sensor (D4) dem Streckenbereich (T2) zugeordnet ist, und dass das Steuermodul (24) eingerichtet ist, den Aktor (6) beim Auffinden einer im Streckenbereich (T2) liegenden virtuellen Markierung (K8) abhängig von der Detektion des Produkts (PS) anzusteuern.

6. Fördersystem (3) nach Anspruch 5, **dadurch gekennzeichnet, dass** die virtuelle Markierung (K1-K12) einen zum Verpackungsschweissen vorgesehenen Zwischenraum zwischen nacheinander folgenden Gegenständen (PS) repräsentiert, dass der Aktor (6) als Schweissbalken ausgeführt ist, dass der Sensor (D4) als Lichtschranke ausgeführt ist, und dass das Steuermodul (24) eingerichtet ist, den Schweissbalken abhängig davon anzusteuern, ob die Lichtschranke ein befördertes Produkt (PS) detektiert.

7. Fördersystem (3) nach einem der Ansprüche 1 bis 6, **dadurch gekennzeichnet, dass** der Markierungsgenerator (21) eingerichtet ist, die Markierungsposition einer virtuellen Markierung (K1-K12) jeweils basierend auf der aktuellen Position (p, pm1, pm2) des zugeordneten Förderelements (30, 31, 32, 33, 34) zum Zeitpunkt des Generierens und einem dem Markierungsgenerator (21) zugeordneten Distanzwert zu einem Systemnullpunkt (Z) zu berechnen, und dass das Markierungssuchmodul (22) eingerichtet ist, die Relativposition einer virtuellen Markierung (K1-K12) jeweils basierend auf der Markierungsposition der betreffenden virtuellen Markierung (K1-K12) und der aktuellen Position (p, pm1, pm2) des zugeordneten Förderelements (30, 31, 32, 33, 34) zum Zeitpunkt des Suchens zu berechnen.

8. Fördersystem (3) nach einem der Ansprüche 1 bis 7, **dadurch gekennzeichnet, dass** das Fördersystem (3) mehrere Förderelemente (30, 31, 32, 33, 34) umfasst, und dass das Fördersystem (3) ein Transfermodul (23) umfasst, welches eingerichtet ist, eine virtuelle Markierung (K1) eines ersten Förderelements (31), beim Erreichen eines Übergabepunkts auf ein nachgeschaltetes zweites Förderelement (32), auf das nachgeschaltete zweite Förderelement (32) zu übertragen.

9. Fördersystem (3) nach Anspruch 8, **dadurch gekennzeichnet, dass** mindestens einige Antriebe (M, M1, M2, M3, M4) der Förderelemente (30, 31, 32, 33, 34) unterschiedliche Antriebsgeschwindigkeiten aufweisen, und dass das Transfermodul (23) eingerichtet ist, das Erreichen des Übergabepunkts für eine virtuelle Markierung (K1) des ersten Förderelements (31) basierend auf der aktuellen Position (pm1) des ersten Förderelements (31) zu bestimmen, beim Übergabepunkt die virtuelle Markierung (K1) dem nachgeschalteten zweiten Förderelement (32) zuzuordnen, und die Markierungsposition (p1') der virtuellen Markierung (K1) abhängig von der aktuellen Position (pm2) des zweiten nachgeschalteten Förderelements (32) anzupassen.

10. Fördersystem (3) nach einem der Ansprüche 8 oder 9, **dadurch gekennzeichnet, dass** das Transfermodul (23) eingerichtet ist, die Markierungsposition (p1') der virtuellen Markierung (K1) auf dem zweiten Förderelement (32) abhängig von mindestens einem aus Geschwindigkeit des ersten Förderelements (31), Masse eines beförderten Produkts (PS), und Typ des beförderten Produkts (PS) zu bestimmen.

11. Fördersystem (3) nach einem der Ansprüche 1 bis 10, **dadurch gekennzeichnet, dass** der Antrieb (M, M1) des Förderelements (30', 30, 31) eine verstellbare Geschwindigkeit aufweist, dass dem Förderelement (30', 30, 31) ein fest getakteter Förderer (300') zum Zuführen von Gegenständen (PS) vorgelagert ist, dass der Markierungsgenerator (21) eingerichtet ist, die virtuellen Markierungen (K1-K12) mit Abständen zu generieren, die von den Gegenständen (PS) zugeordneten Längenvorgaben abhängig sind, und beim Generieren einer virtuellen Markierung (K1-K12) jeweils den Abstand zur vorhergehenden virtuellen Markierung (K1-K12) und die Geschwindigkeit des Förderelements (30', 30, 31) abhängig von aktuellen Produktpositionen von Produkten (PS, PF) auf dem Förderelement (30', 30, 31) zu variieren.

12. Fördersystem (3) nach einem der Ansprüche 1 bis 11, **dadurch gekennzeichnet, dass** dem Förderelement (30) eine Folienzuführung (5) vorgeschaltet ist zum Zuführen einer mit Folienmarkierungen versehenen Folie (PF) auf das Förderelement (30), dass das Fördersystem (3) einen Sensor (D3) zur Bestimmung einer Produktposition der Folie (PF) basierend auf den Folienmarkierungen umfasst, dass dem Förderelement (30) ein fest getakteter Förderer (300') zum Zuführen von Gegenständen (PS) vorgelagert ist, dass der Markierungsgenerator (21) eingerichtet ist, die virtuellen Markierungen (K1-K12) mit produktspezifischen Abständen zwischen den Markierungspositionen zu generieren, und beim Generieren einer virtuellen Markierung (K12) jeweils die Folienzuführung (5) und die betreffende Markierungsposition abhängig von einer Abweichung der Produktposition der Folie (PS) zur Markierungsposition einer vorgängig generierten virtuellen Markierung (K11) entsprechend anzupassen.

13. Computergesteuertes Förderverfahren, in welchem ein Förderelement (30, 31, 32, 33, 34) durch einen Antrieb (M, M1, M2, M3, M4) angetrieben wird, der eine aktuelle Position (p, pm1, pm2) des Förderelements (30, 31, 32, 33, 34) angibt, **gekennzeichnet durch**
Generieren (S4) und Speichern von virtuellen Markierungen (K0-K12) zugeordnet zum Förderelement (30, 31, 32, 33, 34), wobei die virtuellen Markierungen (K0-K12) jeweils eine Markierungsposition umfassen, die auf der aktuellen Position (p, pm1, pm2) des Förderelements (30, 31, 32, 33, 34) zum Zeitpunkt des Generierens basiert, Suchen (S7) von gespeicherten virtuellen Markierungen (K0-K12), die zum Zeitpunkt des Suchens eine innerhalb eines definierten Streckenbereichs (T1-T8) liegende Relativposition zum zugeordneten Förderelement (30, 31, 32, 33, 34) aufweisen, und
Ansteuern (S9) eines Aktors des Fördersystems (3) abhängig davon, ob beim Suchen virtuelle Markierungen (K0-K12) im definierten Streckenbereich (T1-T8) gefunden wurden.

14. Verfahren nach Anspruch 13, **dadurch gekennzeichnet, dass** die virtuellen Markierungen (K0-K12) mit produktspezifischen Abständen zwischen den Markierungspositionen generiert werden, dass eine aktuelle Produktposition eines auf dem Förderelement (30, 31, 32, 33, 34) beförderten Produkts (PS, PF) durch einen Sensor (D3, D4) bestimmt wird, und dass beim Generieren einer virtuellen Markierung jeweils die Markierungsposition abhängig von der aktuellen Produktposition variiert wird.

15. Verfahren nach einem der Ansprüche 13 oder 14, **dadurch gekennzeichnet, dass** Produkte (PS) vom Förderelement (30) durch einen Förderer (7) mit verstellbarer Taktrate weggeführt werden, dass abhängig von Markierungspositionen von im definierten Streckenbereich (T7) gefundenen virtuellen Markierungen (K1-K12) ein Solltakt bestimmt wird, und dass der Förderer (7) mit dem Solltakt angesteuert wird.

16. Verfahren nach einem der Ansprüche 13 bis 15, **dadurch gekennzeichnet, dass** der Streckenbereich (T7) abhängig von der Geschwindigkeit des Förderelements (30) definiert wird.

17. Verfahren nach einem der Ansprüche 13 bis 16, **dadurch gekennzeichnet, dass** der Aktor (6) beim Auffinden einer im Streckenbereich (T6) liegenden virtuellen Markierung abhängig von einer Detektion des Produkts (PS) durch einen dem Streckenbereich (T6) zugeordneten Sensor (D4) angesteuert wird.

18. Verfahren nach einem der Ansprüche 13 bis 17, **dadurch gekennzeichnet, dass** die Markierungsposition einer virtuellen Markierung (K0-K12) jeweils basierend auf der aktuellen Position (p, pm1, pm2) des zugeordneten Förderelements (30, 31, 32, 33, 34) zum Zeitpunkt des Generierens und einem definierten Distanziert zu einem Systemnullpunkt (Z) berechnet wird, und dass die Relativposition einer virtuellen Markierung (K0-K12) jeweils basierend auf der Markierungsposition der betreffenden virtuellen Markierung (K0-K12) und der aktuellen Position (p, pm1, pm2) des zugeordneten Förderelements (30, 31, 32, 33, 34) zum Zeitpunkt des Suchens berechnet wird.

19. Verfahren nach einem der Ansprüche 13 bis 18, **dadurch gekennzeichnet, dass** basierend auf der aktuellen Position (pm1) eines ersten Förderelements (31) bestimmt wird, ob eine virtuelle Markierung (K1) des ersten Förderelements (31) einen Übergabepunkt auf ein nachgeschaltetes zweites Förderelement (32) erreicht, und dass die virtuelle Markierung (K1) beim Erreichen des Übergabepunkts dem nachgeschalteten zweiten Förderelement (32) zugeordnet wird, wobei die Markierungsposition (P1') der virtuellen Markierung (K1) abhängig von der aktuellen Position (pm2) des zweiten nachgeschalteten Förderelements (32) angepasst wird.

20. Verfahren nach Anspruch 19, **dadurch gekennzeichnet, dass** die Markierungsposition der virtuellen Markierung (K1) auf dem zweiten Förderelement (32) abhängig von mindestens einem aus Geschwindigkeit des ersten Förderelements (31), Masse eines beförderten Produkts (PS), und Typ des beförderten Produkts (PS) bestimmt wird.

21. Verwendung eines Computerprogrammprodukts in einem Fördersystem gemäß
Anspruch 1, wobei das Computerprogrammprodukt ein computerlesbares Medium mit
Computercode umfasst, welcher eingerichtet ist, einen oder mehrere Prozessoren eines Steuerungscomputers (2) des Fördersystems (3)
so zu steuern,
dass eine aktuelle Position (p, pm1, pm2) eines Förderelements (30, 31, 32, 33, 34) durch den Steuerungscomputer (2) erfasst wird,
dass virtuelle Markierungen (K0-K12) im Steuerungscomputer (2) generiert und zugeordnet zum Förderelement (30, 31, 32, 33, 34) gespeichert werden, wobei die virtuellen Markierungen (K0-K12) jeweils eine Markierungsposition umfassen, die auf der aktuellen Position (p, pm1, pm2) des Förderelements (30, 31, 32, 33, 34) zum Zeitpunkt des Generierens basiert,
dass im Steuerungscomputer (2) gespeicherte virtuelle Markierungen (K0-K12) gesucht werden, die zum Zeitpunkt des Suchens eine innerhalb eines definierten Streckenbereichs (T1-T8) liegende Relativposition zum zugeordneten Förderelement (30, 31, 32, 33, 34) aufweisen, und
dass der Steuerungscomputer (2) einen Aktor des Fördersystems (3) abhängig davon ansteuert, ob virtuelle Markierungen (K0-K12) im definierten Streckenbereich (T1-T8) gefunden wurden.

## Claims

1. Computer-controlled conveying system (3) comprising at least one conveying element (30, 31, 32, 33, 34) having a drive (M, M1, M2, M3, M4) and a position sensor (N1, N2, N3) for indicating a current position (p, pm1, pm2) of the conveying element (30, 31, 32, 33, 34), **characterized by**
at least one marker generator (21) for generating virtual markers (K0-K12) associated with the conveying element (30, 31, 32, 33, 34), the virtual markers (K0-K12) each being stored with a marker position which is based on the current position (p, pm1, pm2) of the conveying element (30, 31, 32, 33, 34) at the time of generation,
at least one marker search module (22) for searching for virtual markers (K0-K12) which have a relative position with respect to the associated conveying element (30, 31, 32, 33, 34) that lies within a defined sector (T1-T8) at the search time, and
a control module (24) which is set up to drive an actuator of the conveying system (3) depending on whether virtual markers (K0-K12) were found in the defined sector (T1-T8) by the marker search module (22).

2. Conveying system (3) according to Claim 1, **characterized in that** the marker generator (21) is set up to generate the virtual markers (K0-K12) with product-specific distances between the marker positions, **in that** the conveying system (3) comprises a sensor (D3, D4) for determining a current product position of a product (PS, PF) conveyed on the conveying element (30, 31, 32, 33, 34), and **in that** the marker generator (21) is set up to respectively vary the marker position on the basis of the current product position when generating a virtual marker (K0-K12).

3. Conveying system (3) according to either of Claims 1 and 2, **characterized in that** a conveyor (7) with an adjustable clock rate for removing products is downstream of the conveying element (30), and **in that** the control module (24) set up to determine a desired clock rate on the basis of marker positions of virtual markers (K1-K12) found in the defined sector (T7) and to drive the downstream conveyor (7) at the desired clock rate.

4. Conveying system (3) according to one of Claims 1 to 3, **characterized in that** the drive (M, M1, M2, M3, M4) of the conveying element (30, 31, 32, 33, 34) has an adjustable speed, and **in that** the control module (24) is set up to define the sector (T1-T8) on the basis of the speed of the conveying element (30, 31, 32, 33, 34).

5. Conveying system (3) according to one of Claims 1 to 4, **characterized in that** the conveying system (3) comprises a sensor (D4) for detecting a product (PS) conveyed on the conveying element (30), **in that** the sensor (D4) is associated with the sector (T2), and **in that** the control module (24) is set up to drive the actuator (6) on the basis of the detection of the product (PS) when a virtual marker (K8) lying in the sector (T2) is found.

6. Conveying system (3) according to Claim 5, **characterized in that** the virtual marker (K1-K12) represents an intermediate space between successive items (PS) which is provided for the purpose of welding packaging, **in that** the actuator (6) is in the form of a welding bar, **in that** the sensor (D4) is in the form of a light barrier, and **in that** the control module (24) is set up to drive the welding bar depending on whether the light barrier detects a conveyed product (PS).

7. Conveying system (3) according to one of Claims 1 to 6, **characterized in that** the marker generator (21) is set up to respectively calculate the marker position of a virtual marker (K1-K12) on the basis of the current position (p, pm1, pm2) of the associated conveying element (30, 31, 32, 33, 34) at the time of generation and on the basis of a distance value from a system zero point (Z), which value is associated with the marker generator (21), and **in that** the marker search module (22) is set up to respectively calculate the relative position of a virtual marker (K1-K12) on the basis of the marker position of the relevant virtual marker (K1-K12) and the current position (p, pm1, pm2) of the associated conveying element (30, 31, 32, 33, 34) at the search time.

8. Conveying system (3) according to one of Claims 1 to 7, **characterized in that** the conveying system (3) comprises a plurality of conveying elements (30, 31, 32, 33, 34), and **in that** the conveying system (3) comprises a transfer module (23) which is set up to transfer a virtual marker (K1) of a first conveying element (31) to a downstream second conveying element (32) when a transfer point to the downstream second conveying element (32) is reached.

9. Conveying system (3) according to Claim 8, **characterized in that** at least some drives (M, M1, M2, M3, M4) of the conveying elements (30, 31, 32, 33, 34) have different drive speeds, and **in that** the transfer module (23) is set up to determine the reaching of the transfer point for a virtual marker (K1) of the first conveying element (31) on the basis of the current position (pm1) of the first conveying element (31), to associate the virtual marker (K1) with the downstream second conveying element (32) at the transfer point, and to adapt the marker position (p1') of the virtual marker (K1) on the basis of the current position (pm2) of the second downstream conveying element (32).

10. Conveying system (3) according to either of Claims 8 and 9, **characterized in that** the transfer module (23) is set up to determine the marker position (p1') of the virtual marker (K1) on the second conveying element (32) on the basis of at least one of the following: the speed of the first conveying element (31), the mass of a conveyed product (PS) and the type of conveyed product (PS).

11. Conveying system (3) according to one of Claims 1 to 10, **characterized in that** the drive (M, M1) of the conveying element (30', 30, 31) has an adjustable speed, **in that** a fixedly clocked conveyor (300') for supplying items (PS) is upstream of the conveying element (30', 30, 31), **in that** the marker generator (21) is to set up to generate the virtual markers (K1-K12) with distances which are dependent on length specifications associated with the items (PS) and to respectively vary the distance from the preceding virtual marker (K1-K12) and the speed of the conveying element (30', 30, 31) on the basis of current product positions of products (PS, PF) on the conveying element (30', 30, 31) when generating a virtual marker (K1-K12).

12. Conveying system (3) according to one of Claims 1 to 11, **characterized in that** a film feeder (5) for feeding a film (PF) provided with film markers to the conveying element (30) is upstream of the conveying element (30), **in that** the conveying system (3) comprises a sensor (D3) for determining a product position of the film (PF) on the basis of the film markers, **in that** a fixedly clocked conveyor (300') for supplying items (PS) is upstream of the conveying element (30), **in that** the marker generator (21) is set up to generate the virtual markers (K1-K12) with product-specific distances between the marker positions and to respectively adapt the film feeder (5) and the relevant marker position in an appropriate manner on the basis of a difference between the product position of the film (PS) and the marker position of a previously generated virtual marker (K11) when generating a virtual marker (K12).

13. Computer-controlled conveying method in which a conveying element (30, 31, 32, 33, 34) is driven by a drive (M, M1, M2, M3, M4) which indicates a current position (p, pm1, pm2) of the conveying element (30, 31, 32, 33, 34), **characterized by** the following steps:
virtual markers (K0-K12) are generated (S4) and
stored in association with the conveying element (30, 31, 32, 33, 34), the virtual markers (K0-K12) each comprising a marker position which is based on the current position (p, pm1, pm2) of the conveying element (30, 31, 32, 33, 34) at the time of generation,
a search is carried out (S7) for stored virtual markers (K0-K12) which have a relative position with respect to the associated conveying element (30, 31, 32, 33, 34) that lies within a defined sector (T1-T8) at the search time, and
an actuator of the conveying system (3) is driven (S9) depending on whether virtual markers (K0-K12) were found in the defined sector (T1-T8) during searching.

14. Method according to Claim 13, **characterized in that** the virtual markers (K0-K12) are generated with product-specific distances between the marker positions, **in that** a current product position of a product (PS, PF) conveyed on the conveying element (30, 31, 32, 33, 34) is determined by a sensor (D3, D4), and **in that** the marker position is respectively varied on the basis of the current product position when generating a virtual marker.

15. Method according to either of Claims 13 and 14, **characterized in that** products (PS) are removed from the conveying element (30) by a conveyor (7) with an adjustable clock rate, **in that** a desired clock rate is determined on the basis of marker positions of virtual markers (K1-K12) found in the defined sector (T7), and **in that** the conveyor (7) is driven at the desired clock rate.

16. Method according to one of Claims 13 to 15, **characterized in that** the sector (T7) is defined on the basis of the speed of the conveying element (30).

17. Method according to one of Claims 13 to 16, **characterized in that** the actuator (6) is driven by a sensor (D4) associated with the sector (T6) when a virtual marker lying in the sector (T6) is found on the basis of detection of the product (PS).

18. Method according to one of Claims 13 to 17, **characterized in that** the marker position of a virtual marker (K0-K12) is respectively calculated on the basis of the current position (p, pm1, pm2) of the associated conveying element (30, 31, 32, 33, 34) at the time of generation and on the basis of a defined distance value from a system zero point (Z), and **in that** the relative position of a virtual marker (K0-K12) is respectively calculated on the basis of the marker position of the relevant virtual marker (K0-K12) and the current position (p, pm1, pm2) of the associated conveying element (30, 31, 32, 33, 34) at the search time.

19. Method according to one of Claims 13 to 18, **characterized in that** it is determined, on the basis of the current position (pm1) of a first conveying element (31), whether a virtual marker (K1) of the first conveying element (31) reaches a transfer point to a downstream second conveying element (32), and **in that** the virtual marker (K1) is associated with the downstream second conveying element (32) when the transfer point is reached, the marker position (P1') of the virtual marker (K1) being adapted on the basis of the current position (pm2) of the second downstream conveying element (32).

20. Method according to Claim 19, **characterized in that** the marker position of the virtual marker (K1) on the second conveying element (32) is determined on the basis of at least one of the following: the speed of the first conveying element (31), the mass of a conveyed product (PS) and the type of conveyed product (PS).

21. Use of a computer program product in a conveying system according to Claim 1, the computer program product comprising a computer-readable medium having computer code which is set up to control one or more processors of a control computer (2) of the conveying system (3) in such a manner
that a current position (p, pm1, pm2) of a conveying element (30, 31, 32, 33, 34) is detected by the control computer (2),
that virtual markers (K0-K12) are generated in the control computer (2) and are stored in association with the conveying element (30, 31, 32, 33, 34), the virtual markers (K0-K12) each comprising a marker position which is based on the current position (p, pm1, pm2) of the conveying element (30, 31, 32, 33, 34) at the time of generation,
that a search is carried out for virtual markers (K0-K12) which are stored in the control computer (2) and have a relative position with respect to the associated conveying element (30, 31, 32, 33, 34) that lies within a defined sector (T1-T8) at the search time, and
that the control computer (2) drives an actuator of the conveying system (3) depending on whether virtual markers (K0-K12) were found in the defined sector (T1-T8).

## Revendications

1. Système de transport (3) piloté par ordinateur et comprenant au moins un élément de transport (30, 31, 32, 33, 34) doté d'un entraînement (M, M1, M2, M3, M4) et d'un capteur de position (N1, N2, N3) qui indique la position effective (p, pm1, pm2) de l'élément de transport (30, 31, 32, 33, 34), **caractérisé par**
au moins un générateur (21) de repères qui génère des repères virtuels (K0-K12) et qui est associé à l'élément de transport (30, 31, 32, 33, 34), les repères virtuels (K0-K12) étant tous conservés en mémoire avec une position de repère basée sur la position effective (p, pm1, pm2) de l'élément de transport (30, 31, 32, 33, 34) à l'instant de la génération,
au moins un module (22) de recherche de repères qui recherche les repères virtuels (K0-K12) dont la position par rapport à l'élément de transport (30, 31, 32, 33, 34) associé est située à l'intérieur d'une plage d'étendue (T1-T8) définie à l'instant de la recherche et
un module de commande (24) conçu pour commander un actionneur du système de transport (3) selon que le module (22) de recherche de repère a découvert ou non des repères virtuels (K0-K12) dans la plage d'étendue (T1-T8) définie.

2. Système de transport (3) selon la revendication 1, **caractérisé en ce que** le générateur (21) de repères est conçu pour générer les repères virtuels (K0-K12) à des distances entre les positions des repères spécifiques au produit, **en ce que** le système de transport (3) comporte un capteur (D3, D4) qui détermine la position effective d'un produit (PS, PF) transporté sur l'élément de transport (30, 31, 32, 33, 34) et **en ce que** le générateur (21) de repères est conçu pour modifier la position du repère en fonction de la position effective du produit lors de la génération d'un repère virtuel (K0-K12).

3. Système de transport (3) selon l'une des revendications 1 ou 2, **caractérisé en ce que** l'élément de transport (30) est disposé en aval d'un transporteur (7) qui évacue les produits à une cadence ajustable et **en ce que** le module de commande (24) est conçu pour déterminer une cadence de consigne en fonction des positions des repères virtuels (K1-K12) découverts dans la plage d'étendue (T7) définie et pour commander le transporteur aval (7) à la cadence de consigne.

4. Système de transport (3) selon l'une des revendications 1 à 3, **caractérisé en ce que** l'entraînement (M, M1, M2, M3, M4) de l'élément de transport (30, 31, 32, 33, 34) présente une vitesse ajustable et **en ce que** le module de commande (24) est conçu pour définir la plage d'étendue (T1-T8) en fonction de la vitesse de l'élément de transport (30, 31, 32, 33, 34).

5. Système de transport (3) selon l'une des revendications 1 à 4, **caractérisé en ce que** le système de transport (3) comporte un capteur (D4) qui détecte un produit (PS) transporté sur l'élément de transport (30), **en ce que** le capteur (D4) est associé à la plage étendue (T2) et **en ce que** le module de commande (24) est conçu pour commander l'actionneur (6) en fonction de la détection du produit (PS) lorsqu'il découvre un repère virtuel (K8) dans la plage d'étendue (T2).

6. Système de transport (3) selon la revendication 5, **caractérisé en ce que** le repère virtuel (K1-K12) représente l'espace intermédiaire prévu pour le soudage d'emballages entre des objets (PS) successifs, **en ce que** l'actionneur (6) est configuré comme barre de soudage, **en ce que** le capteur (D4) est configuré comme barrière lumineuse et **en ce que** le module de commande (24) est conçu pour commander la barre de soudage selon que la barrière lumineuse a détecté ou non qu'un produit (PS) est transporté.

7. Système de transport (3) selon l'une des revendications 1 à 6, **caractérisé en ce que** le générateur (21) de repères est conçu pour calculer la position d'un repère virtuel (K1-K12) en fonction de la position effective (p, pm1, pm2) de l'élément de transport (30, 31, 32, 33, 34) associé à l'instant de la génération et à calculer la valeur de la distance associée au générateur (21) de repères par rapport un point zéro (Z) du système et **en ce que** le module (22) de recherche de repère est conçu pour calculer la position relative d'un repère virtuel (K1-K12) en fonction de la position du repère virtuel (K1-K12) concerné et de la position effective (p, pm1, pm2) de l'élément de transport (30, 31, 32, 33, 34) associé à l'instant de la recherche.

8. Système de transport (3) selon l'une des revendications 1 à 7, **caractérisé en ce que** le système de transport (3) comporte plusieurs éléments de transport (30, 31, 32, 33, 34) et **en ce que** le système de transport (3) comporte un module de transfert (23) conçu pour transférer le repère virtuel (K1) d'un premier élément de transport (31) lorsqu'il atteint le point de transfert sur un deuxième élément de transport (32) raccordé en aval au deuxième élément de transport (32) raccordé en aval.

9. Système de transport (3) selon la revendication 8, **caractérisé en ce qu'**au moins certains entraînements (M, M1, M2, M3, M4) des éléments de transport (30, 31, 32, 33, 34) présentent différentes vitesses d'entraînement et **en ce que** le module de transfert (23) est conçu pour déterminer que le point de transfert d'un repère virtuel (K1) du premier élément de transport (31) est atteint sur base de la position effective (pm1) du premier élément de transport (31), pour associer au point de transfert le repère virtuel (K1) au deuxième élément de transport (32) raccordé en aval et pour adapter la position (p1') du repère virtuel (K1) en fonction de la position effective (pm2) du deuxième élément de transport (32) raccordé en aval.

10. Système de transport (3) selon l'une des revendications 8 ou 9, **caractérisé en ce que** le module de transfert (23) est conçu pour déterminer la position (p1') du repère virtuel (K1) du deuxième élément de transport (32) au moins en fonction de la masse d'un produit (PS) transporté, qui résulte de la vitesse du premier élément de transport (31) et du type du produit (PS) transporté.

11. Système de transport (3) selon l'une des revendications 1 à 10, **caractérisé en ce que** l'entraînement (M, M1) de l'élément de transport (30', 30, 31) présente une vitesse ajustable, **en ce qu'**un transporteur (300') à cadence fixe est prévu en amont de l'élément de transport (30', 30, 31) pour amener des objets (PS), **en ce que** le générateur (21) de repères est conçu pour générer les repères virtuels (K1-K12) à des distances qui dépendent des spécifications de longueur associées aux objets (PS) et pour, lors de la génération de repères virtuels (K1-K12), faire varier la distance par rapport aux repères virtuels (K1-K12) précédents et la vitesse de l'élément de transport (30', 30, 31) en fonction de positions effectives de produits (PS, PF) sur l'élément de transport (30', 30, 31).

12. Système de transport (3) selon l'une des revendications 1 à 11, **caractérisé en ce qu'**une amenée (5) de film est prévue en amont de l'élément de transport (30) pour amener sur l'élément de transport (30) un film (PF) doté de repères de film, **en ce que** le système de transport (3) comporte un capteur (D3) qui détermine la position de produit du film (PF) en fonction des repères prévus sur le film, **en ce qu'**un transporteur (300') à cadence fixe est prévu en amont de l'élément de transport (30) pour amener des objets (PS), **en ce que** le générateur (21) de repères est conçu pour générer les repères virtuels (K1-K12) à des distances spécifiques aux produits entre les positions des repères et pour, lors de la génération de repères virtuels (K12), adapter de manière appropriée l'amenée (5) de film et la position du repère concerné en fonction de l'écart entre la position de produits du film (PS) et la position d'un repère virtuel (K11) généré précédemment.

13. Procédé de transport piloté par ordinateur, dans lequel un élément de transport (30, 31, 32, 33, 34) est entraîné par un entraînement (M, M1, M2, M3, M4) qui indique la position effective (p, pm1, pm2) de l'élément de transport (30, 31, 32, 33, 34),
**caractérisé par** les étapes qui consistent à : générer (S4) et conserver en mémoire les repères virtuels (K0-K12) associés à l'élément de transport (30, 31, 32, 33, 34), les repères virtuels (K0-K12) comportant chacun une position de repère basée sur la position effective (p, pm1, pm2) de l'élément de transport (30, 31, 32, 33, 34) à l'instant de la génération,
chercher (S7) des repères virtuels (K0-K12) conservés en mémoire qui présentent à l'instant de la recherche une position par rapport à l'élément de transport (30, 31, 32, 33, 34) associé situé à l'intérieur d'une plage d'étendue (T1-T8) définie et
commander (S9) un actionneur du système de transport (3) selon que lors de la recherche, des repères virtuels (K0-K12) ont été découverts ou non dans la plage d'étendue (T1-T8) définie.

14. Procédé selon la revendication 13, **caractérisé en ce que** les repères virtuels (K0-K12) sont générés à des distances spécifiques aux produits entre les positions des repères, **en ce que** la position effective d'un produit (PS, PF) transporté sur l'élément de transport (30, 31, 32, 33, 34) est déterminé par un capteur (D3, D4) et **en ce que** lors de la génération d'un repère virtuel, la position du repère est modifiée en fonction de la position effective du produit.

15. Procédé selon l'une des revendications 13 ou 14, **caractérisé en ce que** des produits (PS) sont évacués de l'élément de transport (30) par un transporteur (7) à cadence ajustable, **en ce qu'**une cadence de consigne est déterminée en fonction de la position des repères virtuels (K1-K12) découverts dans la plage d'étendue (T7) définie et **en ce que** le transporteur (7) est commandé à la cadence de consigne.

16. Procédé selon l'une des revendications 13 à 15, **caractérisé en ce que** la plage d'étendue (T7) est définie en fonction de la vitesse de l'élément de transport (30).

17. Procédé selon l'une des revendications 13 à 16, **caractérisé en ce que** lorsqu'il découvre un repère virtuel situé dans la plage d'étendue (T6), l'actionneur (6) est commandé en fonction de la détection du produit (PS) par un capteur (D4) associé à la plage d'étendue (T6).

18. Procédé selon l'une des revendications 13 à 17, **caractérisé en ce que** la position d'un repère virtuel (K0-K12) est calculée sur base de la position effective (p, pm1, pm2) de l'élément de transport (30, 31, 32, 33, 34) associé à l'instant de la génération et d'une valeur définie de distance par rapport à un point zéro (Z) du système et **en ce que** la position d'un repère virtuel (K0-K12) à l'instant de la recherche est basée sur la position du repère virtuel (K0-K12) concerné et de la position effective (p, pm1, pm2) de l'élément de transport associé (30, 31, 32, 33, 34) à l'instant de la recherche.

19. Procédé selon l'une des revendications 13 à 18, **caractérisé en ce que** sur la base de la position effective (pm1) d'un premier élément de transport (31), il détermine si un repère virtuel (K1) du premier élément de transport (31) a atteint un point de transfert sur un deuxième élément de transport (32) raccordé en aval et **en ce que** lorsque le point de transfert est atteint, le repère virtuel (K1) est associé au deuxième élément de transport (32) raccordé en aval, la position (P1') du repère virtuel (K1) étant adaptée en fonction de la position effective (pm2) du deuxième élément de transport (32) raccordé en aval.

20. Procédé selon la revendication 19, **caractérisé en ce que** la position du repère virtuel (K1) sur le deuxième élément de transport (32) est déterminée au moins en fonction de la masse du produit (PS) transporté déduite de la vitesse du premier élément de transport (31) et du type du produit (PS) transporté.

21. Utilisation d'un produit de programme informatique dans un système de transport selon la revendication 1, le produit de programme informatique comprenant un support lisible par ordinateur et étant doté d'un code informatique conçu pour commander un ordinateur pilote (2) du système de transport (3) de manière à :
saisir la position effective (p, pm1, pm2) d'un élément de transport (30, 31, 32, 33, 34) à l'aide de l'ordinateur de commande (2),
générer des repères virtuels (K0-K12) dans l'ordinateur pilote (2) et les conserver en mémoire en association à l'élément de transport (30, 31, 32, 33, 34), les repères virtuels (K0-K12) comprenant chacun une position basée sur la position effective (p, pm1, pm2) de l'élément de transport (30, 31, 32, 33, 34) à l'instant de la génération,
chercher des repères virtuels (K0-K12) conservés en mémoire dans l'ordinateur pilote (2) et
présentant à l'instant de la recherche une position par rapport à l'élément de transport (30, 31, 32, 33, 34) associé située à l'intérieur d'une plage d'étendue (T1-T8) définie et
faire commander par l'ordinateur pilote (2) un actionneur du système de transport (3) selon que des repères virtuels (K0-K12) ont été ou non découverts dans la plage d'étendue (T1-T8) définie.
